# EUROPEAN PATENT APPLICATION

(11) **EP 3 713 184 A1**
(43) Date of publication of application: **23.09.2020**
(21) Application number: 18889412.5
(22) Date of filing: 05.11.2018
(51) Int. Cl.: H04L 29/06, H04L 12/701

(54) **DATA TRANSMISSION METHOD AND RELATED DEVICE**

(30) Priority: 13.12.2017 CN 201711327870
(71) Applicant: HUAWEI TECHNOLOGIES CO., LTD., Shenzhen, Guangdong 518129 (CN)
(72) Inventor: LIU, Zhun, Shenzhen, Guangdong 518129 (CN); DUAN, Fanghong, Shenzhen, Guangdong 518129 (CN); LI, Wenhui, Shenzhen, Guangdong 518129 (CN); ZHANG, Zhenyu, Shenzhen, Guangdong 518129 (CN)
(74) Representative: Maiwald Patent- und Rechtsanwaltsgesellschaft mbH
(86) International application number: PCT/CN2018/113886
(87) International publication number: WO 2019/114459

(57) **Abstract**

Embodiments of this application disclose a data transmission method and a solution of a related device. The data transmission method includes: establishing, by an Openflow Openflow switch, a first TCP channel between a first port of the Openflow switch and a third port of an Openflow controller, and establishing, by the Openflow switch, a second TCP channel between a second port of the Openflow switch and the third port of the Openflow controller, where the first port and the second port are different ports; determining, by the Openflow switch, a first priority of the first TCP channel and a second priority of the second TCP channel; and transmitting, by the Openflow switch, a packet through the first TCP channel or the second TCP channel based on a priority of the packet. The method can avoid a case in which a packet is blocked on a TCP channel, and improve data transmission efficiency.

## Description

This application claims priority to Chinese Patent Application No. 201711327870.X, filed with the Chinese Patent Office on December 13, 2017 and entitled "DATA TRANSMISSION METHOD AND RELATED DEVICE", which is incorporated herein by reference in its entirety.

### TECHNICAL FIELD

This application relates to the communications field, and in particular, to a data transmission method and a related device.

### BACKGROUND

An Openflow (Openflow) network is a new network architecture that can be defined by software. In the Openflow network, a control plane and a data forwarding plane of a switch in a conventional network are separated, and a centralized controller manages all switches in the network. As a communications protocol, Openflow is a protocol for communication between a controller and a forwarding plane, and implements flexible network traffic control by separating a control plane and a data forwarding plane of a network device. Openflow can provide precise granularity control by identifying a network service with a flow, so that the network can respond to a real-time change of an application layer in time.

An Openflow network structure includes an Openflow controller and an Openflow switch. A transmission control protocol (transmission control protocol, TCP) channel is established between the Openflow controller and the Openflow switch to transmit data. The data may include a flow table, a protocol packet, and the like. However, when there is a large amount of data to be transmitted, traffic suddenly increases, and consequently the data is blocked on the TCP channel, and a keepalive packet may be blocked on the channel and cannot be sent to a related device. This causes a disconnection in the Openflow protocol and a loss of data transmitted on the channel.

In an existing solution, a packet sending sequence is determined based on urgency levels of different packets. A packet with a high urgency level is preferentially sent. However, because an intermediate network is complex, one TCP channel may include a plurality of intermediate network devices. For example, a TCP channel is established between an Openflow controller and an Openflow switch 1, and the TCP channel further passes through an Openflow switch 2 and an Openflow switch 3. As forwarding devices on the TCP, both the Openflow switch 2 and the Openflow switch 3 are intermediate network devices. There may be one or more intermediate network devices. Consequently, packets that are sequentially sent in terms of time may be blocked on a same intermediate network device, and some important packets cannot be normally transmitted either. For example, the Openflow controller cannot receive a keepalive packet. Consequently, a communication disconnection is caused, or a data forwarding failure or the like is caused because a sequence of sending a former flow table and a latter flow table having a dependency relationship with the former flow is disordered, and the latter flow table cannot be obtained after the former flow table is received.

### SUMMARY

Embodiments of this application provide a data transmission method and a related device, to resolve a problem that a packet blocked on a transmission channel in an Openflow network, reduce data loss during data transmission, and improve data transmission efficiency.

In view of this, a first aspect of this application provides a data transmission method, including:
establishing, by an Openflow switch, a first TCP channel between a first port of the Openflow switch and a third port of an Openflow controller, and establishing, by the Openflow switch, a second TCP channel between a second port of the Openflow switch and the third port of the Openflow controller, where the first port and the second port are different ports; determining, by the Openflow switch, a first priority of the first TCP channel and a second priority of the second TCP channel; and transmitting, by the Openflow switch, a packet through the first TCP channel or the second TCP channel based on a priority of the packet. It should be noted that, the first priority and the second priority may be preset by the Openflow switch and the Openflow controller, or may be obtained through negotiation between the Openflow switch and the Openflow controller, or may be allocated by the Openflow switch and notified to the Openflow controller, which is not specifically limited herein.

It should be further noted that, the Openflow switch establishes at least two TCP channels with the Openflow controller, in other words, at least two TCP connections. The Openflow switch establishes the first TCP channel and the second TCP channel with the Openflow controller, and the Openflow switch may further establish a third TCP channel with the Openflow controller on a third port of the Openflow switch, establish a fourth TCP channel with the third port of the Openflow controller on a fourth port, and the like, and so on. This is not specifically limited herein.

In this embodiment of this application, the Openflow switch establishes at least two TCP channels with the Openflow controller. The at least two TCP channels may include the first TCP channel and the second TCP channel, and each TCP channel corresponds to a priority. In addition, each packet transmitted between the Openflow switch and the Openflow controller also corresponds to a priority. A TCP channel may be selected based on a priority of a packet for data transmission. A packet with a high priority may be transmitted through a TCP channel with a high priority. The Openflow switch or the Openflow controller may preferentially transmit the packet with a high priority and an intermediate network device may also preferentially forward the packet with a high priority. Therefore, in this embodiment of this application, the at least two established TCP channels are allocated with corresponding priorities, which can avoid a case in which a packet is blocked on a TCP channel, prevent an important packet with a high priority from being blocked on the TCP channel, and improve data transmission stability, data transmission efficiency and a data transmission capacity.

With reference to the first aspect of this application, in a first implementation of the first aspect of this application, before the transmitting, by the Openflow switch, a packet through the first TCP channel or the second TCP channel based on a priority of the packet, the method may further include:
sending, by the Openflow switch, a first advertisement message to the Openflow controller through the first TCP channel, where the first advertisement message carries information about the first priority; and sending, by the Openflow switch, a second advertisement message to the Openflow controller through the second TCP channel, where the second advertisement message carries information about the second priority, to notify the Openflow controller of the first priority of the first TCP channel and the second priority of the second TCP channel.

In this embodiment of this application, the Openflow switch and the Openflow controller may determine a priority of a TCP channel by using an advertisement message, which is a manner of determining the priority of the TCP channel.

With reference to the first implementation of the first aspect of this application, in a second implementation of the first aspect of this application, the first advertisement message may be a first session priority message, the second advertisement message may be a second session priority message, and the method may further include:
receiving, by the Openflow switch, after the Openflow switch sends the first session priority message to the Openflow controller, a first session priority reply message from the Openflow controller through the first TCP channel, where the Openflow switch obtains, through the first session priority, that the Openflow controller confirms that the Openflow switch is the first priority of the first TCP channel; and receiving, by the Openflow switch, a second session priority reply message from the Openflow controller through the second TCP channel, where the Openflow switch obtains, through the second session priority, that the Openflow controller confirms that the Openflow switch is the second priority of the second TCP channel.

It should be understood that, if the Openflow controller reallocates a third priority to the first TCP channel, or reallocates a fourth priority to the second TCP channel, the first session priority reply message may carry the third priority, or the second session priority may carry the fourth priority. Then, the Openflow switch may obtain, by using the first session priority reply message, that the third priority is a priority of the first TCP channel, and use the third priority as the priority of the first TCP channel. Alternatively, the Openflow switch may obtain, by using the second session priority reply message, that the fourth priority is a priority of the second TCP channel, and use the fourth priority as the priority of the second TCP channel.

In this embodiment of this application, the Openflow switch sends the first session priority message to the Openflow controller through the first TCP channel, where the first session priority message includes the first priority that is of the first TCP channel and that is determined by the Openflow switch, and sends the second session priority message to the Openflow controller through the second TCP channel, where the second session priority message includes the second priority of the second TCP channel determined by the Openflow switch. Then, the Openflow switch receives the first session priority reply message sent by the Openflow controller through the first TCP channel and the second session priority reply message sent by the Openflow controller through the second TCP channel, and the Openflow switch may determine the priority of the first TCP channel and the priority of the second TCP channel by negotiating with the Openflow controller, which adds a manner of determining a priority of a TCP channel, so that the priority of the TCP channel can be accurately determined, and data transmission stability and reliability are improved.

With reference to the first implementation of the first aspect of this application, in a third implementation of the first aspect of this application, the first advertisement message may be a first feature reply message, and the second advertisement message may be a second feature reply message, and before the Openflow switch sends the first advertisement message and the second advertisement message, the method may further include:
receiving, by the Openflow switch, a first feature request message from the Openflow controller through the first TCP channel; and receiving, by the Openflow switch, a second feature request message from the Openflow controller through the second TCP channel.

In this embodiment of this application, after receiving, through the first TCP channel, the first feature request message sent by the Openflow controller, the Openflow switch sends the first feature reply message to the Openflow controller through the first TCP channel, and the feature reply message includes the priority of the first TCP channel; and after receiving, through the second TCP channel, the second feature request message sent by the Openflow controller, the Openflow switch sends the second feature reply message to the Openflow controller through the second TCP channel, and the feature request reply message includes the priority of the second TCP channel, to notify the priority of the first TCP channel and the priority of the second TCP channel to the Openflow controller, which adds a manner of determining a priority of a TCP channel established by the Openflow switch with the Openflow controller.

With reference to the first aspect of this application, and any one of the first implementation of the first aspect of this application to the third implementation of the first aspect of this application, in a fourth implementation of the first aspect of this application, the transmitting, by the Openflow switch, a packet through the first TCP channel or the second TCP channel based on a priority of the packet may include:
determining, by the Openflow switch, that the priority of the packet is the same as the first priority, and transmitting, by the Openflow switch, the packet through the first TCP channel; or determining, by the Openflow switch, that the priority of the packet is the same as the second priority, and transmitting, by the Openflow switch, the packet through the second TCP channel. It should be understood that the priority of the packet may be a processing priority and/or a forwarding priority of the packet, the processing priority of the packet may be a priority of processing the packet by the Openflow switch or the Openflow controller, and the forwarding priority may be a priority of forwarding the packet by the intermediate network device. It should be noted that the priority of the packet may be allocated by the Openflow switch, or may be notified to the Openflow switch after being allocated by the Openflow controller. This is not specifically limited herein.

In this embodiment of this application, if a priority of a packet is the same as a priority of a TCP channel, the Openflow switch may transmit the packet through the TCP channel whose priority is the same as that of the packet. Therefore, a packet with a high priority may be transmitted through a TCP channel with a high priority. The Openflow switch or the Openflow controller may transmit the packet with a high priority, and the intermediate network device may also forward the packet with a high priority first, which can avoid a case in which the packet with a high priority is blocked on the TCP channel, an improve stability and reliability of packet transmission.

With reference to the first aspect of this application, and any one of the first implementation of the first aspect of this application to the fourth implementation of the first aspect of this application, in a fifth implementation of the first aspect of this application, the transmitting, by the Openflow switch, a packet through the first TCP channel or the second TCP channel based on a priority of the packet may include:
determining, by the Openflow switch, that the priority of the packet is the same as the first priority; determining, by the Openflow switch, that a bandwidth occupation rate of the first TCP channel is greater than a first threshold and a bandwidth occupation rate of the second TCP channel is less than a second threshold; and transmitting, by the Openflow switch, the packet through the second TCP channel.

In this embodiment of this application, if the Openflow switch determines that a priority of a packet is the same as the priority of the first TCP channel, the Openflow switch may select to transmit the packet on the first TCP channel. If the Openflow switch detects that the bandwidth occupation rate of the first TCP channel is greater than the first threshold and the bandwidth occupation rate of the second TCP channel is less than the second threshold, the packet may be transmitted through the second TCP channel. In other words, when a load of the first TCP channel is excessively high and a load of the second TCP channel is idle, a packet waiting to be transmitted on the first TCP channel is transmitted through the second TCP channel, which can further improve data transmission efficiency, reduce packet blocking, properly use network resources, and reduce a waste of network resources.

According to a second aspect of this application, a data transmission method is provided, where a first TCP channel is established between a first port of an Openflow switch and a third port of an Openflow controller, a second TCP channel is established between a second port of the Openflow switch and the third port of the Openflow controller, the first port and the second port are different ports, and the method may include:
receiving, by the Openflow controller through the first TCP channel, a first advertisement message sent by the Openflow switch, where the first advertisement message carries information about a first priority; receiving, by the Openflow controller through the second TCP channel, a second advertisement message sent by the Openflow switch, where the second advertisement message carries information about a second priority; determining, by the Openflow controller based on the first advertisement message, that a priority of the first TCP channel is the first priority, and determining, based on the second advertisement message, that a priority of the second TCP channel is the second priority; and transmitting, by the Openflow controller, a packet through the first TCP channel or the second TCP channel based on a priority of the packet.

In this embodiment of this application, the Openflow switch and the Openflow controller may establish at least two TCP channels, including the first TCP channel and the second TCP channel. Each TCP channel corresponds to a priority, and the priority may be sent by the Openflow switch to the Openflow controller by using an advertisement message. In addition, each packet transmitted between the Openflow switch and the Openflow controller also corresponds to a priority. The Openflow controller may select, based on the priority of the packet, a TCP channel for data transmission. A packet with a high priority may be transmitted through a TCP channel with a high priority. The Openflow switch or the controller may preferentially transmit the packet with a high priority, and the intermediate network device may also preferentially forward the packet with a high priority. Therefore, in this embodiment of this application, the at least two established TCP channels can avoid a case in which a packet is blocked on a TCP channel, prevent an important packet with a high priority from being blocked on the TCP channel, and improve data transmission stability and data transmission efficiency.

With reference to the second aspect of this application, in a first implementation of the second aspect of this application, the first advertisement message may be a first session priority message, the second advertisement message may be a second session priority message, and the method may further include:
sending, by the Openflow controller, after the Openflow controller receives the first session priority message sent by the Openflow switch through the first TCP channel, the first session priority reply message to the Openflow switch through the first TCP channel, where the first session priority reply message is used to notify the Openflow switch that the Openflow controller confirms the first priority determined by the Openflow switch; and sending, by the Openflow controller, after the Openflow controller receives the second session priority message sent by the Openflow switch through the second TCP channel, the second session priority reply message to the Openflow switch through the second TCP channel, where the second session priority reply message is used to notify the Openflow switch that the Openflow controller confirms the second priority determined by the Openflow switch.

It should be understood that, if the Openflow controller does not use the first priority as the priority of the first TCP channel, or does not use the second priority as the priority of the second TCP channel, the Openflow controller may continue to negotiate the priority of the first TCP channel or the priority of second TCP channel with the Openflow switch. The Openflow controller may also reallocate a third priority to the first TCP channel, or reallocate a fourth priority to the second TCP channel. The first session priority reply message may carry the third priority, or the second session priority may carry the fourth priority. Then, the Openflow switch may use the third priority as the priority of the first TCP channel by using the first session priority reply message, or the Openflow switch may use the fourth priority as the priority of the second TCP channel by using the second session priority reply message.

In this embodiment of this application, the Openflow switch sends a priority of a TCP channel to the Openflow controller by using a session priority message, and the Openflow controller sends a session priority reply message to the Openflow switch, so that the Openflow switch and the Openflow controller can negotiate to confirm the priority of the TCP channel, thereby increasing a manner of confirming the TCP channel.

With reference to the second aspect of this application, in a second implementation of the second aspect of this application, the first advertisement message is a first feature reply message, the second advertisement message is a second feature reply message, and before the Openflow controller receives the first advertisement message and the second advertisement message sent by the Openflow switch, the method may further include:
sending, by the Openflow controller, after establishing at least two TCP channels, a first feature request message to the Openflow switch through the first TCP channel, where the first feature request message may be used to request to obtain information such as device information or address information of the Openflow switch; and sending, by the Openflow controller, a second feature request message to the Openflow switch through the second TCP channel, where the second feature request message may be used to request to obtain information such as device information or address information of the Openflow switch.

In this embodiment of this application, after the Openflow switch establishes at least two TCP channels with the Openflow controller, the Openflow controller sends at least two feature request messages to the Openflow switch through each TCP channel of the at least two TCP channels. After receiving the at least two feature request messages, the Openflow switch generates feature reply messages for the at least two feature request messages, where the feature reply message carries a priority of a corresponding TCP channel, to notify the Openflow controller of a priority of each of the at least two TCP channels, which adds a manner in which the Openflow controller determines the priority of the TCP channel.

With reference to the second aspect of this application, and any one of the first implementation of the second aspect of this application to the second implementation of the second aspect of this application, in a third implementation of the second aspect of this application, the transmitting, by the Openflow controller, a packet through the first TCP channel or the second TCP channel based on a priority of the packet may include:
determining, by the Openflow controller, that the priority of the packet is the same as the first priority, and transmitting, by the Openflow controller, the packet through the first TCP channel; or determining, by the Openflow controller, that the priority of the packet is the same as the second priority, and transmitting, by the Openflow controller, the packet through the second TCP channel.

In this embodiment of this application, if the Openflow controller determines that the priority of the packet matches a priority of a TCP channel, the Openflow controller transmits the packet through the TCP channel. Therefore, a packet with a high priority may be transmitted through a TCP channel with a high priority, which reduces a situation in which the packet is blocked on the TCP channel, and improves packet transmission stability and reliability.

With reference to the second aspect of this application, and any one of the first implementation of the second aspect of this application to the third implementation of the second aspect of this application, in a fourth implementation of the second aspect of this application, the transmitting, by the Openflow controller, a packet through the first TCP channel or the second TCP channel based on a priority of the packet may include:
After the Openflow controller determines that the priority of the packet is the same as the first priority, the packet needs to be transmitted on the first TCP channel; and if the Openflow controller determines that a bandwidth occupation rate of the first TCP channel is greater than a first threshold and a bandwidth occupation rate of the second TCP channel is less than a second threshold, the Openflow controller may transmit the packet through the second TCP channel. It should be understood that the priority of the packet may be a processing priority and/or a forwarding priority of the packet, the processing priority of the packet may be a priority of processing the packet by the Openflow switch or the Openflow controller, and the forwarding priority may be a priority of forwarding the packet by the intermediate network device. It should be noted that the priority of the packet may be allocated by the Openflow switch, or may be notified to the Openflow switch after being allocated by the Openflow controller. This is not specifically limited herein.

In this embodiment of this application, if the Openflow controller determines that a priority of a packet matches the priority of the first TCP channel, the Openflow controller may transmit the packet on the first TCP channel. If the Openflow controller detects that the bandwidth occupation rate of the first TCP channel is greater than the first threshold and the bandwidth occupation rate of the second TCP channel is less than the second threshold, the packet may be transmitted through the second TCP channel. In other words, when a load of the first TCP channel is excessively high and a load of the second TCP channel is idle, a packet waiting to be transmitted on the first TCP channel is transmitted through the second TCP channel, which can further improve data transmission efficiency, reduce packet blocking, properly use network resources, and reduce a waste of network resources.

A third aspect of this application provides an Openflow switch, where the Openflow switch may include:
an establishment unit, configured to: establish a first TCP channel between a first port of the Openflow switch and a third port of an Openflow controller, and establish a second TCP channel between a second port of the Openflow switch and the third port of the Openflow controller, where the first port and the second port are different ports;
a determining unit, configured to determine a first priority of the first TCP channel and a second priority of the second TCP channel; and
a transmission unit, configured to transmit a packet through the first TCP channel or the second TCP channel based on a priority of the packet.

With reference to the third aspect of this application, in a first implementation of the third aspect of this application,
The transmission unit is further configured to send a first advertisement message to the Openflow controller through the first TCP channel, where the first advertisement message carries information about the first priority.

The transmission unit is further configured to send a second advertisement message to the Openflow controller through the second TCP channel, where the second advertisement message carries information about the second priority.

With reference to the first implementation of the third aspect of this application, in a second implementation of the third aspect of this application, the first advertisement message is a first session priority message, and the second advertisement message is a second session priority message.

The transmission unit is further configured to receive a first session priority reply message from the Openflow controller through the first TCP channel, where the first session priority reply message is used by the Openflow controller to confirm the first priority determined by the Openflow switch.

The transmission unit is further configured to receive a second session priority reply message from the Openflow controller through the second TCP channel, where the second session priority reply message is used by the Openflow controller to confirm the second priority determined by the Openflow switch.

With reference to the first implementation of the third aspect of this application, in a third implementation of the third aspect of this application, the first advertisement message is a first feature reply message, and the second advertisement message is a second feature reply message, and before the transmission unit sends the first advertisement message and the second advertisement message,
The transmission unit is further configured to receive a first feature request message from the Openflow controller through the first TCP channel.

The transmission unit is further configured to receive a second feature request message from the Openflow controller through the second TCP channel.

With reference to the third aspect of this application, and any one of the first implementation of the third aspect of this application to the third implementation of the third aspect of this application, in a fourth implementation of the third aspect of this application,
After the determining unit determines that the priority of the packet is the same as the first priority, the transmission unit is specifically configured to transmit the packet through the first TCP channel; or
After the determining unit determines that the priority of the packet is the same as the second priority, the transmission unit is specifically configured to transmit the packet through the second TCP channel.

With reference to the third aspect of this application, and any one of the first implementation of the third aspect of this application to the fourth implementation of the third aspect of this application, in a fifth implementation of the third aspect of this application,

The determining unit is further configured to determine that the priority of the packet is the same as the first priority.

The determining unit is further configured to determine that a bandwidth occupation rate of the first TCP channel is greater than a first threshold and a bandwidth occupation rate of the second TCP channel is less than a second threshold.

The transmission unit is further configured to: transmit the packet through the second TCP channel after the determining unit determines that the bandwidth occupation rate of the first TCP channel is greater than the first threshold and the bandwidth occupation rate of the second TCP channel is less than the second threshold.

According to a fourth aspect of this application, an Openflow controller is provided, where a first TCP channel is established between a first port of an Openflow switch and a third port of the Openflow controller, a second TCP channel is established between a second port of the Openflow switch and the third port of the Openflow controller, the first port and the second port are different ports, and the Openflow controller may include:
a transmission unit, configured to receive, through the first TCP channel, a first advertisement message sent by the Openflow switch, where the first advertisement message carries information about a first priority, where
the transmission unit is further configured to receive, through the second TCP channel, a second advertisement message sent by the Openflow switch, where the second advertisement message carries information about a second priority; and
a determining unit is configured to: determine, based on the first advertisement message, that a priority of the first TCP channel is the first priority; and determine, based on the second advertisement message, that a priority of the second TCP channel is the second priority, where
a transmission unit is configured to transmit a packet through the first TCP channel or the second TCP channel based on a priority of the packet.

With reference to the fourth aspect of this application, in a first implementation of the fourth aspect of this application, the first advertisement message is a first session priority message, and the second advertisement message is a second session priority message.

The transmission unit is further configured to send the first session priority reply message to the Openflow switch through the first TCP channel, where the first session priority reply message is used by the determining unit to confirm the first priority determined by the Openflow switch.

The transmission unit is further configured to send the second session priority reply message to the Openflow switch through the second TCP channel, where the second session priority reply message is used by the Openflow controller to confirm the second priority determined by the Openflow switch.

With reference to the first implementation of the fourth aspect of this application, in a second implementation of the fourth aspect of this application, the first advertisement message is a first feature reply message, and the second advertisement message is a second feature reply message, and before the transmission unit receives the first advertisement message and the second advertisement message sent by the Openflow switch,
the transmission unit is further configured to send a first feature request message to the Openflow switch through the first TCP channel.
the transmission unit is further configured to send a second feature request message to the Openflow switch through the second TCP channel.

With reference to the fourth aspect of this application, and any one of the first implementation of the fourth aspect of this application to the second implementation of the fourth aspect of this application, in a third implementation of the third aspect of this application,
After the determining unit determines that the priority of the packet is the same as the first priority, the transmission unit is specifically configured to transmit the packet through the first TCP channel; or
After the determining unit determines that the priority of the packet is the same as the second priority, the transmission unit is specifically configured to transmit the packet through the second TCP channel.

With reference to the fourth aspect of this application, and any one of the first implementation of the fourth aspect of this application to the third implementation of the fourth aspect of this application, in a fourth implementation of the fourth aspect of this application,

The determining unit is further configured to determine that the priority of the packet is the same as the first priority.

The determining unit is further configured to determine that a bandwidth occupation rate of the first TCP channel is greater than a first threshold and a bandwidth occupation rate of the second TCP channel is less than a second threshold.

The transmission unit is further configured to: transmit the packet through the second TCP channel after the determining unit determines that the bandwidth occupation rate of the first TCP channel is greater than the first threshold and the bandwidth occupation rate of the second TCP channel is less than the second threshold.

A fifth aspect of an embodiment of this application provides an Openflow switch, which may include:
a processor and a memory, where the processor is connected to the memory;
the memory is configured to store program code; and
when invoking the program code in the memory, the processor performs steps performed by the Openflow switch provided in the first aspect or any one of implementations of the first aspect in this application.

A sixth aspect of an embodiment of this application provides an Openflow controller, which may include:
a processor and a memory, where the processor is connected to the memory;
the memory is configured to store program code; and
when invoking the program code in the memory, the processor performs steps performed by the Openflow controller provided in the second aspect or any one of implementations of the second aspect in this application.

A seventh aspect of an embodiment of this application provides a communications system. The communications system includes an Openflow switch and an Openflow controller. The Openflow switch is an Openflow switch that performs any one of implementations of the first aspect to the second aspect of this application. The Openflow controller is an Openflow controller that performs any one of the first aspect to the second aspect of this application.

An eighth aspect of an embodiment of this application provides a storage medium. It should be noted that technical solutions of this application essentially, or the part contributing to the prior art, or all or some of the technical solutions may be implemented in a form of a software production. The computer software product is stored in a storage medium, and is configured to store a computer software instruction used by the foregoing device. The computer software instruction includes a program that is designed for an Openflow switch or an Openflow controller to perform any one of the first aspect to the second aspect.

The storage medium includes: any medium that can store program code, such as a USB flash drive, a removable hard disk, a read-only memory (English acronym: ROM, English full name: Read-Only Memory), a random access memory (English acronym: RAM, English full name: Random Access Memory), a magnetic disk, or an optical disc.

A ninth aspect of an embodiment of this application provides a computer program product including an instruction. When the instruction runs on a computer, the computer performs the method according to any one of the first aspect or optional implementations of the first aspect of this application.

A tenth aspect of an embodiment of this application provides a computer program product including an instruction. When the instruction runs on a computer, the computer performs the method according to any one of the second aspect or optional implementations of the second aspect of this application.

An eleventh aspect of this application provides a communications apparatus. The communications apparatus may include: a processor and a memory. The memory is configured to store an instruction. The processor is configured to execute the instruction in the memory, so that the communications apparatus performs the method according to any one of the first aspect or implementations of the first aspect.

A twelfth aspect of this application provides a communications apparatus. The communications apparatus may include: a processor and a memory. The memory is configured to store an instruction. The processor is configured to execute the instruction in the memory, so that the communications apparatus performs the method according to any one of the second aspect or implementations of the second aspect.

It can be learned from the foregoing technical solutions that, embodiments of this application have the following advantages:
In the embodiments of this application, at least two TCP channels are established between an Openflow switch and an Openflow controller, and each TCP channel has a corresponding priority. Then, the Openflow switch selects, based on a priority of a packet, a proper TCP channel to transmit the packet. Therefore, in this application, the Openflow switch establishes a plurality of TCP channels with the Openflow controller. Compared with one TCP channel in an existing solution, this can avoid packet congestion on one TCP channel. In addition, each TCP channel has a corresponding priority, and a corresponding TCP channel may be selected based on the priority of the packet. For example, a TCP channel with a high priority may be selected for a packet with a high priority for transmission, which can avoid a situation that the packet with a high priority is blocked on the TCP channel and reduce packet blocking on the TCP channel.

### BRIEF DESCRIPTION OF DRAWINGS

FIG. 1 is a diagram of a network architecture according to an embodiment of this application;
FIG. 2 is a schematic diagram of an embodiment of a data transmission method according to an embodiment of this application;
FIG. 3 is a schematic diagram of another embodiment of a data transmission method according to an embodiment of this application;
FIG. 4 is a schematic diagram of another embodiment of a data transmission method according to an embodiment of this application;
FIG. 5 is a schematic diagram of another embodiment of a data transmission method according to an embodiment of this application;
FIG. 6 is a schematic diagram of another embodiment of a data transmission method according to an embodiment of this application;
FIG. 7 is a schematic diagram of an embodiment of an Openflow switch according to an embodiment of this application;
FIG. 8 is a schematic diagram of an embodiment of an Openflow controller according to an embodiment of this application;
FIG. 9 is a schematic diagram of another embodiment of an Openflow switch according to an embodiment of this application; and
FIG. 10 is a schematic diagram of another embodiment of an Openflow controller according to an embodiment of this application.

### DESCRIPTION OF EMBODIMENTS

The embodiments of this application provide a data transmission method and a related device, to resolve a problem that a packet is blocked on a transmission channel in an Openflow network. This reduces a data loss during data transmission, and improves data transmission efficiency.

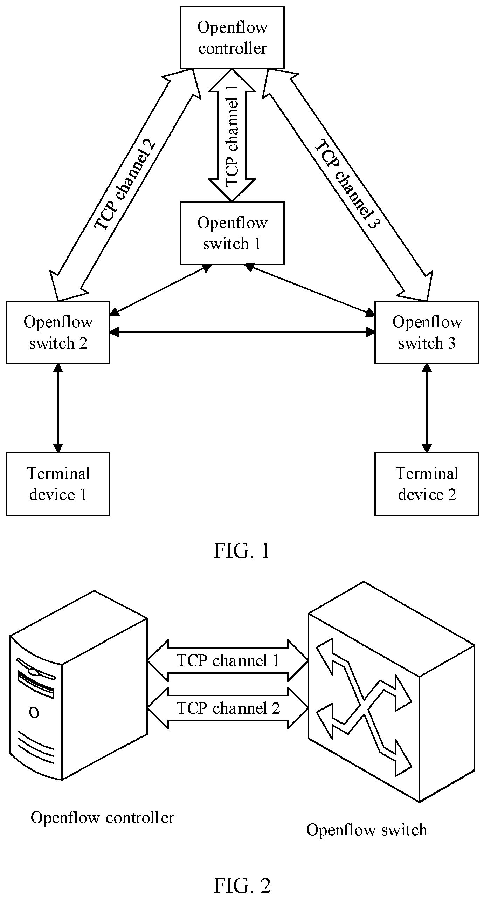

FIG. 1 is a diagram of a network architecture according to an embodiment of this application. An Openflow network mainly includes an Openflow controller and an Openflow switch. One Openflow controller may establish TCP connections to a plurality of Openflow switches by using an Openflow protocol, and the Openflow switches may be connected to each other. The Openflow switch may also be connected to a terminal device, and is configured to forward data of the terminal device or deliver data to the terminal device. The network architecture in this embodiment of this application may include a plurality of Openflow controllers or Openflow switches. In the figure, only three Openflow switches: an Openflow switch 1, an Openflow switch 2, and an Openflow switch 3 are used as an example for illustration. To perform data transmission between an Openflow controller and an Openflow switch, a TCP channel needs to be established between the Openflow controller and the Openflow switch. The TCP channel is a channel through which the Openflow controller and the Openflow switch are directly connected by using a link. The Openflow controller establishes a TCP channel 1 with the Openflow switch 1. The Openflow controller establishes a TCP channel 2 with the Openflow switch 2. The Openflow controller establishes a TCP channel 3 with the Openflow switch. In an actual network architecture, the Openflow switches may be far away from each other in terms of physical location. Therefore, there may be an intermediate network device on one TCP channel. For example, when the Openflow controller establishes the TCP channel 3 with the Openflow switch 3, the TCP channel 3 further passes through an Openflow switch 4 (not shown in the figure). The Openflow switch 4 further independently establishes a TCP channel 4 with the Openflow controller. The Openflow switch 4 performs data forwarding only on the TCP channel 3. Therefore, the Openflow switch 4 is an intermediate network device on the TCP channel 3. It should be understood that there may be one or more intermediate network devices, and the intermediate network device may be an Openflow switch, or may be another network device in a network. This is not specifically limited herein. For example, when data is transmitted on the TCP channel 3, because the Openflow controller further establishes the TCP channel 4 with the Openflow switch 4, the Openflow switch 4 not only receives data sent by the Openflow controller, but also needs to forward data sent by the Openflow controller to the Openflow switch 3 through the TCP channel 3. Therefore, when a large amount of data is transmitted on both the TCP channel 3 and the TCP channel 4, the large amount of data may be blocked in the Openflow switch 4, and a keepalive packet sent by the Openflow controller or the Openflow switch 3 on the TCP channel 3 may be blocked in the Openflow switch 4. Consequently, a disconnection of the TCP channel 3 protocol is caused.

Therefore, to resolve a problem of a data sending failure caused because a link disconnection is caused when data blocking occurs due to a large amount of data, an embodiment of this application provides a data transmission method. FIG. 2 is a schematic diagram of an embodiment of a data transmission method according to an embodiment of this application.

One Openflow switch and one Openflow controller are used as an example. At least two TCP channels are established between one Openflow controller and one Openflow switch. The at least two TCP channels may be two TCP channels or five TCP channels. This is not limited herein. Herein, only two TCP channels are used as an example. Two TCP channels, in other words, two TCP connections, are established between the Openflow controller and the Openflow switch, including a TCP channel 1 and a TCP channel 2. A specific process of establishing the TCP channel 1 and the TCP channel 2 may be as follows: The Openflow switch initiates establishment of a channel between a first port of the Openflow switch and a third port of the Openflow controller, and the Openflow switch initiates establishment of a channel between a second port of the Openflow switch and the third port of the Openflow controller. When the Openflow controller listens on the third port of the Openflow controller, the Openflow controller receives a first establishment request message that is of the TCP channel 1 and that is sent by the Openflow switch through the first port and replies to the first establishment request message, and receives a second establishment request message that is of the TCP channel 2 and that is sent by the Openflow switch through the second port and replies to the second establishment request message. After the Openflow controller completes "three-way handshake" with the first port of the Openflow switch, the Openflow switch establishes a TCP connection, in other words, the TCP channel 1, between the first port and the third port of the Openflow controller. After the Openflow controller completes "three-way handshake" with the second port of the Openflow switch, the Openflow switch establishes a TCP connection, in other words, the TCP channel 2, between the second port and the third port of the Openflow controller. The first port and the second port are different ports on the Openflow switch. For example, a port number of the first port may be 61647, and a port number of the second port may be 61648. The third port may be a well-known port of the Openflow controller, for example, a port numbered 6653, or may be a port agreed on by the Openflow controller and the Openflow switch. This is not specifically limited herein. In this embodiment of this application, establishment of only two TCP channels is used as an example. In addition, three TCP channels or four TCP channels may be established. A specific process may be similar to an establishment manner provided in this embodiment of this application. Details are not described herein.

The TCP channel 1 and the TCP channel 2 may be used to transmit data between the Openflow controller and the Openflow switch. Either of the two TCP channels corresponds to one priority. For example, the TCP channel 1 corresponds to a first priority, and the TCP channel 2 corresponds to a second priority. A packet transmitted between the Openflow controller and the Openflow switch also has a corresponding priority. The Openflow switch or the Openflow controller may select, based on the priority of the packet, a corresponding TCP channel to transmit the packet. For example, the Openflow switch or the Openflow controller may select a TCP channel with a high priority to transmit a packet with a high priority.

In this embodiment of this application, the Openflow switch establishes a first TCP channel, in other words, the TCP channel 1, between the first port of the Openflow switch and the third port of the Openflow controller. The Openflow switch establishes a second TCP channel, in other words, the TCP channel 2, between the second port of the Openflow switch and the third port of the Openflow controller. The first port and the second port are different ports. In addition to the TCP channel 1 and the TCP channel 2, the Openflow switch may further establish a TCP channel between another port of the Openflow switch and the third port of the Openflow controller. This is not limited in this embodiment of this application. Each TCP channel established by the Openflow switch has a corresponding priority. Each packet transmitted between the Openflow switch and the Openflow controller also has a corresponding priority. The Openflow switch or the Openflow controller may select a TCP channel for transmitting each packet based on the priority of each packet. For example, a packet with a high priority may be transmitted through a TCP channel with a high priority. A packet transmitted on a TCP channel with a high priority may be preferentially processed or transmitted by the Openflow switch or the Openflow controller, or may be preferentially forwarded by an intermediate network device. Therefore, packets with different priorities may be transmitted through different TCP channels. This can increase a transmission capacity of data between the Openflow switch and the Openflow controller, and can prevent a packet with a high priority from being blocked on a TCP channel.

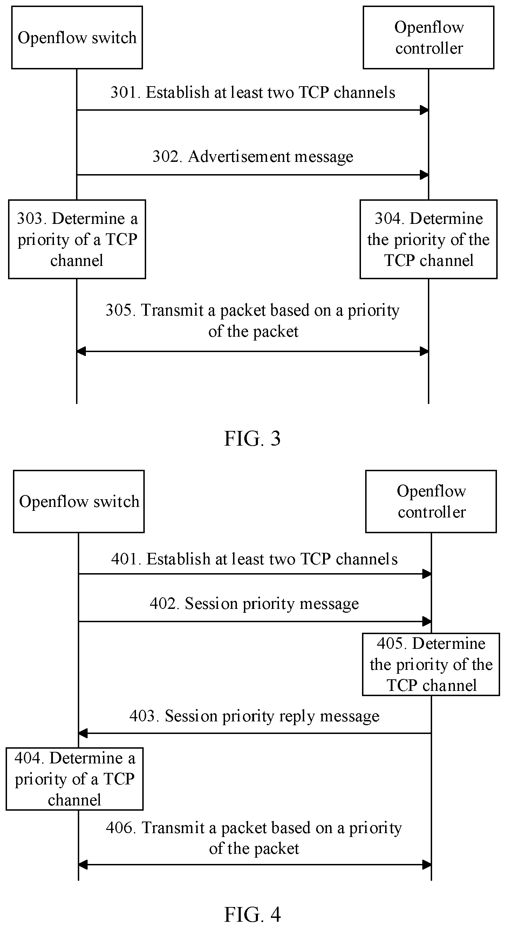

The foregoing describes the data transmission method provided in this embodiment of this application. The following describes a specific procedure of a data transmission method provided in embodiments of this application. FIG. 3 is a schematic diagram of another embodiment of a data transmission method according to an embodiment of this application. The method may include the following steps.

301. An Openflow switch establishes at least two TCP channels with an Openflow controller.

Establishment of the at least two TCP channels is initiated by the Openflow switch. The Openflow switch establishes at least two TCP connections between at least two ports of the Openflow switch and one port of the Openflow controller. For example, two TCP channels are established. The Openflow switch establishes a first TCP channel between a first port of the Openflow switch and a third port of the Openflow controller, and the Openflow switch establishes a second TCP channel between a second port of the Openflow switch and the third port of the Openflow controller. The first port and the second port are different ports of the Openflow switch. It should be noted that the at least two TCP channels may include two TCP channels, or three TCP channels, or six TCP channels. An establishment process is similar to the foregoing process of establishing the two TCP channels. Details are not described herein again. It should be further noted that the third port may be a well-known port, for example, 6653, or may be a port agreed by the Openflow switch. This is not specifically limited herein.

A specific process of establishing a TCP channel may be as follows: One TCP channel is used as an example. The Openflow switch initiates a TCP establishment request to the Openflow controller through a port of the Openflow switch. The Openflow controller listens on a port of the Openflow controller. After receiving, by listening on the port, the establishment request sent by the Openflow switch, the Openflow controller sends a first acknowledgment message to the Openflow switch, to reply to the establishment request. After receiving the first acknowledgment message, the Openflow switch sends a second acknowledgment message to the Openflow controller, to notify the Openflow controller that the first acknowledgment message is received. It should be understood that a specific procedure of establishing at least two TCP channels is similar to the specific procedure of establishing one TCP channel. Details are not described herein again.

302. The Openflow switch sends an advertisement message to the Openflow controller.

The Openflow switch may send at least two advertisement messages to the Openflow controller through each of the at least two TCP channels. For example, the Openflow switch may send a first advertisement message to the Openflow controller through the first TCP channel, the Openflow switch may further send a second advertisement message to the Openflow controller through the second TCP channel, and the Openflow switch may further send a third advertisement message to the Openflow controller through a third TCP channel. By analogy, a quantity of advertisement messages corresponds to a quantity of the at least two TCP channels. The at least two advertisement messages may include priority information of the at least two channels. For example, the first advertisement message may include a first priority of the first TCP channel, the second advertisement message may include a second priority of the second TCP channel, and so on. After receiving the at least two advertisement messages, the Openflow controller may obtain a priority of each of the at least two TCP channels by using the at least two advertisement messages. If the advertisement message does not include the priority of the TCP channel, the advertisement message may include information about the Openflow switch, such as address information, device information, or version information.

In addition, priorities of the at least two TCP channels may be sent by the Openflow switch to the Openflow controller by using advertisement messages, and the priorities of the at least two TCP channels may also be preset by the Openflow switch and the Openflow controller. This embodiment of this application imposes no limitation on a manner in which the Openflow switch and the Openflow controller agree on a priority, in other words, preset a priority. For example, a priority of a TCP channel established by the Openflow switch through the first port is the first priority, a priority of a TCP channel established by the Openflow switch through the second port is the second priority, and so on. For another example, if the Openflow switch first initiates a TCP connection establishment request on the first port, a priority of a TCP channel established between the first port of the Openflow switch and the Openflow controller is the first priority, and if the Openflow switch initiates a TCP connection establishment request on the second port after the Openflow switch initiates TCP establishment through the first port, a priority of a TCP channel established between the second port of the Openflow switch and the Openflow controller is the second priority, and so on. This embodiment of this application imposes no limitation on a manner in which the Openflow switch and the Openflow controller agree on a priority.

303. The Openflow switch determines a priority of a TCP channel.

If the at least two advertisement messages sent by the Openflow switch to the Openflow controller include the priorities of the at least two TCP channels, the Openflow switch may determine the priorities of the at least two TCP channels before sending the priorities of the at least two TCP channels, or determine the priorities of the at least two TCP channels after sending the at least two TCP channels. If the priorities of the at least two TCP channels are pre-agreed on by the Openflow switch and the Openflow controller, a sequence of performing step 302 and step 303 is not limited in this embodiment of this application. Step 302 may be performed first, or step 303 may be performed first, or step 302 and step 303 may be simultaneously performed. This is not specifically limited herein.

304. The Openflow controller determines the priority of the TCP channel.

When the at least two advertisement messages sent by the Openflow switch to the Openflow controller include the priorities of the at least two TCP channels, the Openflow controller may obtain the priorities of the at least two TCP channels from the at least two advertisement messages. For example, the Openflow controller may obtain the first priority of the first channel and the second priority of the second channel from the at least two advertisement messages.

In addition, the priorities of the at least two TCP channels may be agreed on by the Openflow controller and the Openflow switch in advance. For example, a priority of a TCP channel established by the Openflow switch through the first port is the first priority, a priority of a TCP channel established by the Openflow switch through the second port is the second priority, and so on. For another example, if the Openflow switch first initiates a TCP connection establishment request on the first port, a priority of a TCP channel established between the first port of the Openflow switch and the Openflow controller is the first priority, and if the Openflow switch initiates a TCP connection establishment request on the second port after the Openflow switch initiates TCP establishment through the first port, a priority of a TCP channel established between the second port of the Openflow switch and the Openflow controller is the second priority.

305. The Openflow switch and the Openflow controller transmit a packet based on a priority of the packet.

The Openflow switch and the controller may transmit the packet based on the priority of the packet. The Openflow switch may select, based on a priority of a report packet, a corresponding TCP channel to transmit the report packet. The Openflow controller may also select, based on a priority of a deliver packet, a corresponding TCP channel to transmit the deliver packet. The priority of the packet may be allocated to the packet by the Openflow switch or the Openflow controller. Allocation may be specifically performed based on a type of the packet, a length of the packet, or the like. This is not specifically limited herein. For example, the Openflow switch may allocate a TCP channel with a high priority to a report packet with a high priority, and the Openflow controller may also allocate a TCP channel with a high priority to a deliver packet with a high priority. The Openflow switch or the Openflow controller may preferentially send a packet with a high priority, or if there is an intermediate network device in a TCP channel, the intermediate network device preferentially forwards a packet transmitted on a TCP channel with a higher priority.

In this embodiment of this application, the Openflow switch establishes at least two TCP channels between at least two ports of the Openflow switch and one port of the Openflow controller, the at least two TCP channels have corresponding priorities, and each packet also has a priority. The Openflow switch and the Openflow controller may select, based on a priority of a packet, a corresponding TCP channel to transmit the packet. Therefore, a TCP channel with a high priority may be selected to transmit a packet with a high priority, and the packet with a high priority may be preferentially transmitted. For example, the intermediate network device preferentially forwards the packet with a high priority. A packet transmitted on the TCP channel with a high priority may be preferentially transmitted. For example, the intermediate network device preferentially forwards the packet transmitted on the TCP channel with a high priority.

Specifically, a specific application scenario is used as an example for description. The Openflow controller listens on a port 6653. The Openflow switch sets source port numbers to 61647, 61648, and 61649, and initiates, through ports whose source port numbers are 61647, 61648, and 61649, a TCP connection establishment request to a port whose destination port number is 6653 on the Openflow controller. The TCP connection establishment request includes a first establishment request, a second establishment request, and a third establishment request. The first establishment request is used to request to establish the first TCP channel with, in other words, the first TCP connection to, the destination port 6623 through the source port 61647. The second establishment request is used to establish the second TCP channel with, in other words, the second TCP connection to, the destination port 6623 through the source port 61648. The third establishment request is used to establish a third TCP channel with, in other words, a third TCP connection to, the destination port 6623 through the source port 61649. After receiving the first establishment request, the second establishment request, and the third establishment request, the Openflow controller separately performs "three-way handshake" with the Openflow switch through the source port 61647, the source port 61648, and the source port 61649, to establish three TCP connections, in other words, the first TCP channel, the second TCP channel, and the third TCP channel. Then, the Openflow switch sends the first advertisement message to the Openflow controller through the first TCP channel, sends the second advertisement message to the Openflow controller through the second TCP channel, and sends the third advertisement message to the Openflow controller through the third TCP channel. The first advertisement message includes the first priority of the first TCP channel, the second advertisement message includes the second priority of the second TCP channel, and the third advertisement message includes a third priority of the third TCP channel. After receiving the first advertisement message, the second advertisement message, and the third advertisement message, the Openflow controller obtains the first priority of the first TCP channel, the second priority of the second TCP channel, and the third priority of the third TCP channel. The Openflow controller may use the first priority as the first priority of the first TCP channel, or may reallocate a priority to the first TCP channel, and then notify the Openflow switch of the reallocated priority. A priority of the second TCP channel and a priority of the third TCP channel determined by the Openflow controller are similar to the priority of the first TCP channel. Details are not described herein again. After both the Openflow switch and the Openflow controller determine priorities of the first TCP channel, the second TCP channel, and the third TCP channel, the Openflow switch or the Openflow controller allocates a priority to each packet that needs to be transmitted, and then allocates, based on the priority of the packet, a TCP channel for transmission. A packet with a high priority is allocated to a TCP channel with a high priority for transmission, and the intermediate network device may preferentially forward a packet transmitted on the TCP channel with a high priority. Therefore, the packet with a high priority is transmitted through the TCP channel with a high priority. This can improve transmission efficiency of a packet with a high priority, and prevent the packet with a high priority from being blocked on a TCP channel.

Further, there may be different manners for the Openflow switch or the Openflow controller to determine the priority of the TCP channel. The following describes a specific procedure of a data transmission method provided in this embodiment of this application. FIG. 4 is a schematic diagram of another embodiment of a data transmission method according to an embodiment of this application. The method may include the following steps.

401. An Openflow switch establishes at least two TCP channels with an Openflow controller.

Step 401 in this embodiment of this application is similar to step 301 in FIG. 3. Details are not described herein again.

402. The Openflow switch sends a session priority message to the Openflow controller.

The Openflow switch sends at least two session priority messages to the Openflow controller through the at least two TCP channels. The Openflow switch sends one session priority message to the Openflow controller through each TCP channel. The at least two session priority messages include priorities of the at least two TCP channels. For example, a first session priority message carries a first priority of a first TCP channel, a second session priority message carries a second priority of a second TCP channel, a third session priority message carries a third priority of a third TCP channel, and so on.

In addition, it should be understood that, before the Openflow switch sends the session priority message to the Openflow controller, some optional steps may be performed. For example, the Openflow switch may further send a keepalive packet to the Openflow controller through each TCP channel of the at least two TCP channels, or the Openflow controller sends a message of obtaining information of the Openflow switch to the Openflow switch. This is not specifically limited herein.

403. The Openflow controller determines the priority of the TCP channel.

After receiving the at least two session priority messages sent by the Openflow switch, the Openflow controller determines priorities of the at least two TCP channels. A specific manner in which the Openflow controller determines the priorities of the at least two TCP channels may be as follows: The at least two session priority messages carry the priorities of the at least two TCP channels, and the Openflow controller obtains, from the at least two session priority messages, the priorities of the at least two TCP channels sent by the Openflow switch. The Openflow controller may use the priorities carried in the at least two session priority messages as priorities of the at least two TCP channels, and the Openflow controller may also reallocate priorities to the at least two TCP channels.

For example, the Openflow controller receives the first session priority message sent by the Openflow switch through the first TCP channel and the second session priority message sent by the Openflow switch through the second TCP channel. The first session priority message carries the first priority of the first TCP channel, and the second session priority message carries the second priority of the second TCP channel. The Openflow controller separately obtains the first priority of the first TCP channel and the second priority of the second TCP channel from the first session priority message and the second session priority message. The Openflow controller may use the first priority as a priority of the first TCP channel, and use the second priority as a priority of the second TCP channel. The Openflow controller may also reallocate a first priority to the first TCP channel, and/or reallocate a second priority to the second TCP channel. This is not specifically limited herein.

404. The Openflow controller sends a session priority reply message to the Openflow switch.

After determining the priorities of the at least two TCP channels, the Openflow controller generates at least two session priority reply messages. Each session priority reply message corresponds to one session priority message sent by the Openflow switch. The session priority reply message may include the priorities of the at least two TCP channels obtained from the at least two session priority messages, or may include a priority reallocated by the Openflow controller, or a field agreed on by the Openflow controller and the Openflow switch.

Specifically, the first TCP channel in the at least two TCP channels is used as an example. The Openflow controller obtains the first priority of the first TCP channel from the first session priority message, and generates a first priority reply message based on the first session priority message. The first priority reply message may include the first priority, or may be a second priority reallocated by the Openflow controller to the first TCP channel, or may be a field agreed on by the Openflow controller and the Openflow switch, or the like. If the first priority reply message includes the first priority, the Openflow controller notifies, by using the first priority reply message, the Openflow switch to determine that the first priority is the priority of the first TCP channel. If the first session priority reply message includes the second priority, and the second priority is a priority reallocated by the Openflow controller to the first TCP channel, the Openflow controller notifies, by using the first session priority message, the Openflow switch to determine that the priority of the first TCP channel is the second priority. The first session priority reply message may further include a field agreed on by the Openflow controller and the Openflow switch. For example, if the Openflow controller agrees with the Openflow switch, when a first byte in the first session priority reply message is 0xFF, the Openflow controller determines that the first priority in the first session priority message is the priority of the first TCP channel. Alternatively, when the first byte in the first session priority reply message is 0x01, the Openflow controller determines that the first priority in the first session priority message is the priority of the first TCP channel. Alternatively, if the first session priority reply message includes 0x01, the Openflow controller determines that the priority of the first TCP channel is the first priority, if the first session priority reply message includes 0x02, the Openflow controller determines that the priority of the first TCP channel is the second priority, if the first session priority reply message includes 0x03, the Openflow controller determines that the priority of the first TCP channel is the third priority, and the like. Alternatively, the session priority information may carry a negative field, for example, 0x00, to notify the Openflow switch that the Openflow controller does not agree to use the first priority as the priority of the first TCP channel, and then the Openflow switch or the Openflow controller reallocates a priority to the first TCP channel. This is not specifically limited herein.

405. The Openflow switch determines a priority of a TCP channel.

After receiving the session priority reply message sent by the Openflow controller, the Openflow switch may determine the priorities of the at least two TCP channels. For example, the Openflow switch receives, through the first TCP channel, the first session priority reply message sent by the Openflow controller. The first session priority reply message is used to reply to the first session priority message sent by the Openflow switch to the Openflow controller, and the first session priority includes the first priority of the first TCP channel. If the first session priority reply message includes the first priority, the Openflow switch determines that the priority of the first TCP channel is the first priority. If the first session priority reply message includes a character agreed on by the Openflow switch and the Openflow controller, for example, 0xFF and 0x01, the Openflow switch determines that the priority of the first TCP channel is the first priority. If the first session priority reply message includes the second priority, the Openflow switch uses the second priority as the priority of the first TCP channel.

406. The Openflow switch and the Openflow controller transmit a packet based on a priority of the packet.

Step 406 in this embodiment of this application is similar to step 305 in FIG. 3. Details are not described herein again.

In this embodiment of this application, after establishing the at least two TCP channels with the Openflow controller, the Openflow switch sends the priorities of the at least two TCP channels to the Openflow switch by using a session priority message. After receiving the priorities of the at least two TCP channels, the switch sends a session priority reply message to the Openflow switch. The Openflow controller may use the received priorities as the priorities of the at least two TCP channels, or may reallocate priorities to the at least two TCP channels. The Openflow controller sends the session priority reply message to the Openflow switch, to enable the Openflow switch to determine a priority of each of the at least two TCP channels. The Openflow switch may negotiate a priority of the TCP channel with the Openflow controller, which increases a manner of determining the priorities of the at least two TCP channels. In addition, the Openflow switch allocates a priority to each TCP channel, and then determines a TCP channel for transmitting a packet based on a priority of the packet. A packet with a high priority may be transmitted through a TCP channel with a high priority, and an intermediate network device may preferentially forward or transmit a packet transmitted on the TCP channel with a high priority, which reduces a situation that a packet is blocked on the TCP channel.

More specifically, a specific application scenario is used as an example to describe the solution in this embodiment of this application. The Openflow controller listens on a port 6653. The Openflow switch sets source port numbers to 61647, 61648, and 61649, and initiates, through ports whose source port numbers are 61647, 61648, and 61649, a TCP connection establishment request to a port whose destination port number is 6653 on the Openflow controller. After receiving the establishment request, the Openflow controller separately performs "three-way handshake" with the Openflow switch through the source port 61647, the source port 61648, and the source port 61649, and establishes three TCP connections, in other words, the first TCP channel, the second TCP channel, and the third TCP channel. Then, the Openflow switch sends a first session priority message to the Openflow controller through the first TCP channel, sends a second session priority message to the Openflow controller through the second TCP channel, and sends a third session priority message to the Openflow controller through the third TCP channel. The first session priority message includes a first priority of the first TCP channel, the second session priority message includes a second priority of the second TCP channel, and the third session priority message includes a third priority of the third TCP channel. After receiving the first session priority message, a second advertisement message, and the third session priority message, the Openflow controller obtains the first priority of the first TCP channel, the second priority of the second TCP channel, and the third priority of the third TCP channel. The Openflow controller may use the first priority as the first priority of the first TCP channel, or may reallocate a priority to the first TCP channel, notify the Openflow switch of the reallocated priority, and then send a first session priority reply message to the Openflow switch. For example, the first session priority reply message sent by the Openflow controller to the Openflow switch includes one byte, for example, 0xFF, and that the Openflow controller uses the first priority as the priority of the first TCP channel is notified to the Openflow switch. Alternatively, the first session priority reply message includes the first priority, and that the Openflow controller uses the first priority as the priority of the first TCP channel is notified to the Openflow switch. Alternatively, the first session priority reply message includes a fourth priority, and the Openflow controller uses the fourth priority as the priority of the first TCP channel is notified to the Openflow switch. The Openflow controller determines that a priority of the second TCP channel and a priority of the third TCP channel are similar to the priority of the first TCP channel. Details are not described herein again. After both the Openflow switch and the Openflow controller determine priorities of the first TCP channel, the second TCP channel, and the third TCP channel, the Openflow switch or the Openflow controller allocates a priority to each packet that needs to be transmitted, and then allocates, based on a priority of the packet, a TCP channel for transmission. A packet with a high priority is allocated to a TCP channel with a high priority for transmission, and the intermediate network device may preferentially forward a packet transmitted on the TCP channel with a high priority. Therefore, the packet with a high priority is transmitted through the TCP channel with a high priority. This can improve efficiency of the packet with a high priority, and prevent the packet with a high priority from being blocked on the TCP channel.

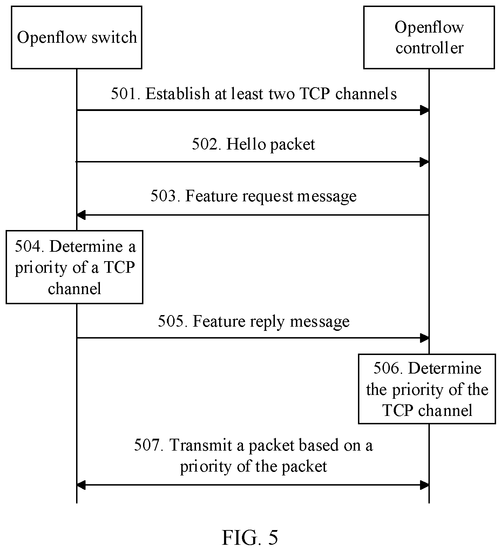

The foregoing describes determining of the priorities of the at least two TCP channels by using the session priority message. The priorities of the at least two TCP channels may be determined by the Openflow switch or the Openflow controller. In addition, the Openflow switch and the Openflow controller may further determine the priorities of the at least two TCP channels by using a feature reply message. The following describes another specific procedure of a data transmission method provided in this embodiment of this application. FIG. 5 is a schematic diagram of another embodiment of a data transmission method according to an embodiment of this application. The method may include the following steps.

501. An Openflow switch establishes at least two TCP channels with an Openflow controller.

Step 501 in this embodiment of this application is similar to step 301 in FIG. 3. Details are not described herein again.

502. The Openflow switch sends a hello packet to the Openflow controller.

After establishing the at least two TCP channels with the Openflow controller, the Openflow switch sends at least two keepalive packets, in other words, hello packets, to the Openflow controller through each TCP channel of the at least two TCP channels. For example, the Openflow switch sends a first hello packet to the Openflow controller through a first TCP channel, the Openflow switch sends a second hello packet to the Openflow controller through a second TCP channel, and so on. The hello packet may carry an OFPT HELLO message in an Openflow protocol, and the keepalive packet may include a negotiation version of a current Openflow protocol, another Openflow element, and the like, to set a connection between the Openflow switch and the Openflow controller.

503. The Openflow controller sends a feature request message to the Openflow controller.

After receiving the hello packet sent by the Openflow switch and determining that the negotiation version in the hello packet is consistent with a negotiation version of the Openflow protocol of the Openflow controller, the Openflow controller sends the feature request message to the Openflow controller. The feature request message is used to obtain address information, device information, and the like of the Openflow switch. The feature request message may be an OFPT FEATURES REQUEST packet in the Openflow protocol.

504. The Openflow switch determines a priority of a TCP channel.

The Openflow switch determines a priority of each of the at least two TCP channels. The priority of each of the at least two TCP channels may be allocated by the Openflow switch.

It should be noted that a sequence of performing step 504 and step 502 is not limited in this embodiment of this application. Step 502 may be performed first, or step 504 may be performed first. This is not specifically limited herein.

505. The Openflow switch sends a feature reply message to the Openflow controller.

After receiving the feature request message sent by the Openflow controller, the Openflow switch generates the feature reply message. The feature reply message includes the address information, the device information, or the like of the Openflow switch. Priority fields of the at least two TCP channels are further added to the feature reply message, to notify the Openflow controller of priorities of the at least two TCP channels. The feature reply message may be an OFPT FEATURES REPLY packet in the Openflow protocol. For example, five bytes are added to the feature reply message. A first byte represents a first priority of the first TCP channel, a second byte represents a priority of the second TCP channel, and so on. Alternatively, two bytes are added. A first byte is used to identify the first priority of the first TCP channel, a second byte is used to identify the priority of the second TCP channel, and so on.

506. The Openflow controller determines a priority of a TCP channel.

After receiving the feature reply message sent by the Openflow switch, the Openflow controller may obtain, from the feature reply message, the priorities of the at least two TCP channels established between the Openflow switch and the Openflow controller. A specific obtaining manner may be as follows: In addition to information such as an address and device information of the Openflow switch, five bytes are added, and a first byte represents a first priority of the first TCP channel, a second byte represents a priority of the second TCP channel, and so on; alternatively, eight bytes are added, and a first byte is used to identify the first priority of the first TCP channel, a second byte is used to identify the priority of the second TCP channel, and so on. This is not specifically limited herein.

507. The Openflow switch and the Openflow controller transmit a packet based on a priority of the packet.

Step 507 in this embodiment of this application is similar to step 305 in FIG. 3. Details are not described herein again.

In this embodiment of this application, after establishing the at least two TCP channels with the Openflow controller, the Openflow switch sends the priorities of the at least two TCP channels to the Openflow controller by using the feature reply message, so that the Openflow controller determines the priority of each of the at least two TCP channels, determines a corresponding TCP channel based on the priority of each packet, and transmits the packet through the corresponding TCP channel. A packet with a high priority may be transmitted through a TCP channel with a high priority, and an intermediate network device preferentially forwards a packet transmitted on the TCP channel with a high priority, which may prevent the packet with a high priority from being blocked on the TCP channel, and avoid a case in which a packet blocked on the TCP channel.

More specifically, a specific application scenario is used as an example for description. The Openflow controller listens on a port 6653. The Openflow switch sets source port numbers to 61647, 61648, and 61649, and initiates, through the ports whose source port numbers are 61647, 61648, and 61649, a TCP connection establishment request to a port whose destination port number is 6653 on the Openflow controller. After receiving the establishment request, the Openflow controller separately performs "three-way handshake" with the Openflow switch through the source port 61647, the source port 61648, and the source port 61649, and establishes three TCP connections, in other words, the first TCP channel, the second TCP channel, and a third TCP channel. Then, the Openflow switch sends a hello packet to the Openflow controller through the first TCP channel, the second TCP channel, and the third TCP channel respectively. The hello packet includes the negotiation version of the current Openflow protocol. After receiving the hello packet sent by the Openflow switch through the first TCP channel, the second TCP channel, and the third TCP channel respectively and determining that the negotiation version is consistent with the negotiation version of the Openflow protocol in the Openflow controller, the Openflow controller separately sends a feature request message to the Openflow switch through the first TCP channel, the second TCP channel, and the third TCP channel, which is used to request information such as address information and device information of the Openflow switch. Then, the Openflow switch sends a first feature reply message to the Openflow controller through the first TCP channel, sends a second feature reply message to the Openflow controller through the second TCP channel, and sends a third feature reply message to the Openflow controller through the third TCP channel. The first feature reply message includes the first priority of the first TCP channel, the second feature reply message includes the second priority of the second TCP channel, and the third feature reply message includes a third priority of the third TCP channel. After receiving the first feature reply message, the second feature reply message, and the third feature reply message, the Openflow controller obtains the first priority of the first TCP channel, the second priority of the second TCP channel, and the third priority of the third TCP channel. The Openflow controller may use the first priority as the first priority of the first TCP channel. The Openflow controller determines that a priority of the second TCP channel and a priority of the third TCP channel are similar to the priority of the first TCP channel. Details are not described herein again. After both the Openflow switch and the Openflow controller determine priorities of the first TCP channel, the second TCP channel, and the third TCP channel, the Openflow switch or the Openflow controller allocates a priority to each packet that needs to be transmitted, and then allocates, based on a priority of the packet, a TCP channel for transmission. A packet with a high priority is allocated to a TCP channel with a high priority for transmission, and the intermediate network device may preferentially forward a packet transmitted on the TCP channel with a high priority. Therefore, the packet with a high priority is transmitted through the TCP channel with a high priority. This can improve transmission efficiency of a packet with a high priority, and prevent the packet with a high priority from being blocked on the TCP channel.

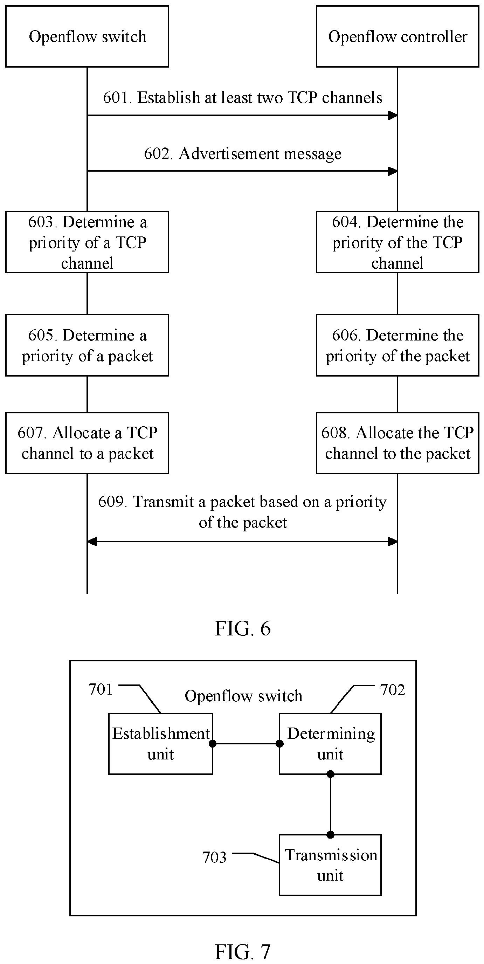

The foregoing describes determining of the priorities of the at least two TCP channels established by the Openflow switch with the Openflow controller, which may prevent the packet with a high priority from being blocked on the TCP channel. The following describes in detail a specific procedure of determining a priority of a packet. FIG. 6 is a schematic diagram of another embodiment of a data transmission method in an embodiment of this application. The method includes the following steps.

601. An Openflow switch establishes at least two TCP channels with an Openflow controller.

Step 601 in this embodiment of this application is similar to step 301 in FIG. 3. Details are not described herein again.

602. The Openflow switch sends an advertisement message to the Openflow controller.

The advertisement message in this embodiment of this application may be the advertisement message in FIG. 3, or may be the session priority message in FIG. 4, or may be the feature reply message in FIG. 5. When the advertisement message is the advertisement message in FIG. 3, step 602 in this embodiment of this application is similar to step 302 in FIG. 3. When the advertisement message is the session priority message in FIG. 4, step 602 in this embodiment of this application is similar to step 402 in FIG. 4. When the advertisement message is the feature reply message in FIG. 5, step 602 in this embodiment of this application is similar to step 505 in FIG. 5. Details are not described herein again.

603. The Openflow switch determines a priority of a TCP channel.

Before sending the advertisement message or after sending the advertisement message to the Openflow controller, the Openflow switch determines priorities of the at least two TCP channels. When the advertisement message is the session priority message in FIG. 4, the Openflow switch determines the priority of the TCP channel after receiving the advertisement message. When the advertisement message is the feature reply message in FIG. 5, the Openflow switch may determine the priority of the TCP channel before sending the advertisement message. Alternatively, when the advertisement message does not include the priorities of the at least two TCP channels, the priorities of the at least two TCP channels may also be preset in the Openflow switch and the Openflow controller.

It should be understood that step 603 in this embodiment of this application is similar to step 303 in FIG. 3, step 405 in FIG. 4, or step 505 in FIG. 5. Details are not described herein again.

604. The Openflow controller determines the priority of the TCP channel.

The Openflow controller may determine the priorities of the at least two TCP channels after receiving a message sent by the Openflow switch, or the Openflow controller and the Openflow switch may agree on the priorities of the at least two TCP channels in advance.

It should be understood that step 604 in this embodiment of this application is similar to step 304 in FIG. 3, step 404 in FIG. 4, or step 506 in FIG. 5. Details are not described herein again.

605. The Openflow switch determines a priority of a packet.

The Openflow switch may obtain a priority allocated by the Openflow controller to each packet. Further, the priority of the packet may include a packet priority a forwarding priority. The packet priority may be used by the Openflow controller or the Openflow switch to process a priority of a packet. The Openflow switch preferentially processes a packet with a higher priority. The forwarding priority is a priority of forwarding the packet by an intermediate network device. The intermediate network device preferentially forwards the packet with a high priority of forwarding. In actual application, the forwarding priority of a packet may be set to be corresponding to the packet priority. For example, if the packet priority of a packet is a first priority, the forwarding priority of the packet is also the first priority, and if the packet priority of a packet is a second priority, the forwarding priority of the packet is also the second priority.

The Openflow switch may also allocate a priority to a report packet based on a packet type of the report packet. The report packet is a packet sent by the Openflow switch to the Openflow controller. A priority allocated to a protocol packet may be higher than a priority of another packet, so that the protocol packet is preferentially transmitted during packet transmission. Alternatively, more network resources are allocated to the protocol packet, and a specific manner of reserving the network resources may be as follows: The network resources are reserved for the packet based on a resource reservation protocol (resource reservation protocol, RSVP), to avoid protocol link disconnection caused by blocking of the protocol packet on the TCP channel. It should be understood that, the priority of the report packet may also be allocated by the Openflow controller and then delivered to the Openflow switch, and a priority of a flow table packet delivered by the Openflow controller can only be allocated by the Openflow controller.

606. The Openflow controller determines the priority of the packet.

The Openflow controller may allocate a priority to each packet based on a packet type of each packet. A packet with a high priority may be preferentially transmitted or allocated to more network resources. Further, the priority of the packet may include a packet priority a forwarding priority. The packet priority may be used by the Openflow controller or the Openflow switch to process a priority of a packet. The Openflow switch preferentially processes a packet with a higher priority. The forwarding priority is a priority of forwarding the packet by an intermediate network device. The intermediate network device preferentially forwards the packet with a high priority of forwarding. In actual application, the forwarding priority of a packet may be set to be corresponding to the packet priority. For example, if the packet priority of a packet is a first priority, the forwarding priority of the packet is also the first priority, and if the packet priority of a packet is a second priority, the forwarding priority of the packet is also the second priority. Packets in an Openflow network are further classified into a protocol packet, a flow table packet, and the like. If the protocol packet is blocked on the TCP channel, an Openflow protocol is disconnected, a TCP channel is disconnected, and data forwarding fails. Therefore, a priority allocated to the protocol packet may be higher than that allocated to the flow table packet, and the like. For example, the priority allocated to the protocol packet is higher than that allocated to an important flow table packet, and a priority allocated to the important flow table packet is higher than that allocated to an unimportant flow table packet. The protocol packet may include a hello packet used to keep connection alive. A higher priority is allocated to the protocol packet, and during transmission, the protocol packet is preferentially transmitted, or more network resources are allocated to the protocol packet, to avoid protocol link disconnection caused by blocking of the protocol packet on the TCP channel. In addition, a priority of the flow table packet may be configured by the Openflow controller. The flow table packet includes a plurality of flow tables, and the plurality of flow tables may be dependent on each other. For example, a routing table has an association relationship with interface information and address resolution protocol (address resolution protocol, ARP) information, and the interface information and the ARP information are stored in a lower-level flow table of the routing table. If the interface information and the ARP information are not delivered first, when the routing table is delivered, there will be a situation that the lower-level table cannot be obtained and data is lost. Therefore, the priority of the flow table may be higher than a priority of an upper-level flow table of the flow table.

It should be understood that, in actual application, a priority of a packet may be allocated by an Openflow switch, or may be allocated by an Openflow controller, or may be a priority of a report packet allocated by an Openflow switch, or a priority of a deliver packet allocated by the Openflow controller. Alternatively, priorities of all packets may be allocated by the Openflow controller. For example, a list of correspondence between a packet and a priority is generated, and a transmission list is configured for each TCP channel. Then, the Openflow controller delivers the priorities of all packets to the Openflow switch, and the Openflow switch may transmit the report packet based on the priority allocated by the Openflow controller.

It should be noted that, when the Openflow switch allocates the priority to the report packet, a sequence of performing step 605 and step 606 is not limited in this embodiment of this application. Step 605 may be performed first, or step 606 may be performed first. This is not specifically limited herein.

607. The Openflow switch allocates a TCP channel to a packet.

After determining the priority of the report packet, the Openflow switch may allocate a corresponding TCP channel to the report packet from the at least two TCP channels. The report packet is sent by the Openflow switch to the Openflow controller, and packets with different priorities may be allocated to different TCP channels. For example, a first TCP channel is allocated to a packet with a first priority, and a second TCP channel is allocated to a packet with a second priority. The packet with the first priority is transmitted on the first TCP channel, and the packet with the second priority is transmitted on the second TCP channel. When a priority of a packet is allocated, if a priority of a protocol packet is higher than that of another packet, a TCP channel may be allocated to the protocol packet, to prevent the protocol packet and the another packet from being blocked on one TCP channel.

Specifically, a manner in which the Openflow switch allocates a TCP channel to each packet may be as follows: The Openflow switch configures an access control list (Access Control List, ACL) for each TCP channel, or receives an ACL delivered by the Openflow controller. The ACL corresponding to each TCP channel includes a packet that can be transmitted through the TCP channel. When determining that a packet needs to be transmitted, the Openflow switch may determine, by using the ACL, a TCP channel for transmitting the packet. A packet in the ACL may be allocated based on a priority of the packet. For example, a packet with the first priority is allocated to a first ACL, a packet with the second priority is allocated to a second ACL, a packet with the third priority is allocated to a third ACL, and so on.

Specifically, the manner in which the Openflow switch allocates the TCP channel to each packet may also be that the Openflow switch reserves network resources for a packet with a high priority. For example, if the Openflow switch transmits a packet with a high priority, the Openflow switch may reserve a separate TCP channel for the packet in advance, and the packet with a high priority is transmitted through the TCP channel, to prevent the packet with a high priority from being blocked on the TCP channel.

In addition, the Openflow switch may further obtain a bandwidth occupation rate of each of the at least two TCP channels, and may allocate some packets of a TCP channel with a high bandwidth occupation rate to a TCP channel with a low bandwidth occupation rate for transmission. For example, if a bandwidth occupation rate of the first TCP channel is greater than a first threshold, and a bandwidth occupation rate of the second TCP channel is less than a second threshold, a packet to be transmitted on the first TCP channel may be allocated to the second TCP channel for transmission. Therefore, packet transmission efficiency can be improved, data congestion on the TCP channel can be reduced, and network resources can be properly used, thereby avoiding a waste of the network resources.

608. The Openflow controller allocates a TCP channel to a packet.

After determining priorities of deliver packets, the Openflow controller may allocate a corresponding TCP channel to each packet from the at least two TCP channels. Because there are a plurality of TCP channels, packets with different priorities may be allocated to different TCP channels. For example, a mapping table may be preset in the Openflow switch. If a priority of a packet corresponds to the first priority of the first TCP channel, the first TCP channel is allocated to the packet. If a priority of a packet corresponds to the second priority of the second TCP channel, the second TCP channel is allocated to the packet with the second priority. Therefore, in actual application, a TCP channel may be separately allocated to a packet with a high priority, to prevent a protocol packet and another packet from being blocked on one TCP channel.

Specifically, a manner in which the Openflow controller allocates a TCP channel to each packet may be as follows: The Openflow controller configures one ACL for each TCP channel, and the ACL corresponding to each TCP channel includes a packet that can be transmitted through the TCP channel. When the Openflow controller determines that a packet needs to be transmitted, a TCP channel for transmitting the packet may be determined by using the ACL. A packet in the ACL may be allocated based on a priority of the packet. For example, a packet with the first priority is allocated to the first ACL, and the first priority is transmitted through the first TCP channel, a packet with the second priority is allocated to the second ACL, and the second priority is transmitted through the second TCP channel, a packet with the third priority is allocated to the third ACL, and the third priority is transmitted through the third TCP channel, and so on.

Specifically, the manner in which the Openflow controller allocates a TCP channel to each packet may also be that the Openflow controller reserves more network resources for a packet with a high priority. For example, if the Openflow controller transmits a packet with a high priority, the Openflow controller may reserve a separate TCP channel for the packet in advance, and the packet with a high priority is transmitted through the TCP channel, to prevent the packet with a high priority from being blocked on the TCP channel.

It should be understood that step 607 in this embodiment of this application is performed after step 605. Step 608 in this embodiment of this application is performed after step 606. A sequence of performing step 607 and step 608 is not limited in this embodiment of this application. Step 607 may be performed first, or step 608 may be performed first. This is not specifically limited herein.

609. The Openflow switch and the Openflow controller transmit a packet based on a priority of the packet.

Each packet may be transmitted through a corresponding TCP channel allocated by the Openflow controller or the Openflow switch. For example, if the Openflow controller or the Openflow switch allocates the first TCP channel to a protocol packet, the protocol packet may be transmitted through the first TCP channel. The Openflow controller has established the at least two TCP channels with the Openflow switch, and data transmission can be performed on each of the at least two TCP channels. Therefore, when each packet is allocated, based on a priority, to the at least two TCP channels for transmission, a packet with a high priority and a packet with a low priority may be separately transmitted through different TCP channels, so that the packet with a high priority can be quickly transmitted, which avoids blocking of the packet with a high priority and the packet with low priority on one TCP channel. More network resources than the packet with a low priority may be further allocated to the packet with a high priority, so that the packet with a high priority is transmitted by using more network resources. This further improves efficiency of transmitting the packet with a high priority, and further avoids a situation that the packet with a high priority is blocked on the TCP channel. For example, a protocol packet and a flow table packet are sent on different channels, to prevent the protocol packet and the flow table packet from being blocked on a channel. Alternatively, network resources more than the flow table packet are allocated to the protocol packet, so that the protocol packet can be transmitted quickly, to avoid protocol link disconnection caused by blocking of the protocol packet on a channel.

In addition, to further improve packet transmission efficiency, the Openflow switch may further obtain a bandwidth occupation rate of each of the at least two TCP channels, and may allocate some packets of a TCP channel with a high bandwidth occupation rate to a TCP channel with a low bandwidth occupation rate for transmission. For example, if a bandwidth occupation rate of the first TCP channel is greater than a first threshold, and a bandwidth occupation rate of the second TCP channel is less than a second threshold, a packet to be transmitted on the first TCP channel may be allocated to the second TCP channel for transmission, so that network resources can be properly used, and the packet transmission efficiency can be improved.

In this embodiment of this application, the at least two TCP channels are established between the Openflow controller and the Openflow switch. The Openflow controller or the Openflow switch allocates a priority to each packet transmitted on the at least two TCP channels. Then, the Openflow controller or the Openflow switch allocates, based on the priority, a corresponding TCP channel to each packet from the at least two TCP channels. Each packet may be transmitted through the allocated corresponding TCP channel, and packets with different priorities may be transmitted through different TCP channels, which avoids congestion of a packet with a high priority and a packet with a low priority on one TCP channel, and avoids blocking of a packet and protocol link disconnection caused by congestion of the TCP channel, to improve data transmission efficiency and a data transmission capacity.

Specifically, three TCP channels are used as an example. A specific process of data transmission method may be as follows: Three TCP channels are established between the Openflow switch and the Openflow controller, including a first TCP channel, a second TCP channel, and a third TCP channel. The first TCP channel corresponds to a first priority, the second TCP channel corresponds to a second priority, and the third TCP channel corresponds to a third priority. The first priority is higher than the second priority, and the second priority is higher than the third priority. The Openflow controller respectively allocates an ACL 1, an ACL 2, and an ACL 3 to the first TCP channel, the second TCP channel, and the third TCP channel. A packet in the ACL 1 list is transmitted on the first TCP channel, a packet in the ACL 2 list is transmitted on the second TCP channel, and a packet in the ACL 3 list is transmitted on the third TCP channel. When receiving a packet transmitted on the first TCP channel, the intermediate network device preferentially forwards the packet. A packet with a high priority may be transmitted on a TCP channel with a high priority, to prevent the packet with a high priority from being blocked on the TCP channel. If the Openflow controller or the Openflow switch detects that a bandwidth occupation rate of the first TCP channel is 5%, which is lower than 30%, and the second TCP bandwidth occupation rate is 99%, which is higher than 70%, some packets waiting to be transmitted on the second TCP channel may be allocated to the first TCP channel for transmission, thereby further improving packet transmission efficiency.

More specifically, in actual application, for example, there are 60 packets in the Openflow switch to be sent. Because an amount of packet data is too large, using one TCP channel causes blocking of the packet. The Openflow switch establishes four TCP channels with the Openflow controller. Priorities of the four TCP channels are respectively as follows: a priority of a first TCP channel is a first priority, a priority of a second TCP channel is also the first priority, a priority of a third TCP channel is a second priority, and a priority of the fourth TCP channel is a third priority. The Openflow switch also allocates priorities to the 60 packets. A protocol packet is the first priority, an important flow table packet is the second priority, and an unimportant flow table packet is the third priority. The first priority is higher than the second priority, and the second priority is higher than the third priority. The 60 packets are allocated to the four TCP channels. Two TCP channels, in other words, the first TCP channel and the second TCP channel, are allocated to the protocol packet. One TCP channel, in other words, the third TCP channel, is allocated to the important flow table packet. One TCP channel, in other words, the fourth TCP channel, is allocated to the unimportant flow table packet. A packet with a high priority and a packet with a low priority are transmitted through different TCP channels, and the packet with a high priority is preferentially transmitted, to avoid congestion of the packet with a high priority and the packet with a low priority on one TCP channel, which improves data transmission reliability.

A data transmission method provided in this embodiment of this application is described in detail above. An embodiment of this application further provides an apparatus corresponding to the data transmission method. The following describes the apparatus provided in this embodiment of this application. FIG. 7 is a schematic diagram of an embodiment of an Openflow switch in an embodiment of this application. The Openflow switch may include an establishment 701, a determining unit 702, and a transmission unit 703.

The establishment unit 701 is configured to: establish a first TCP channel between a first port of the Openflow switch and a third port of an Openflow controller, and establish a second TCP channel between a second port of the Openflow switch and the third port of the Openflow controller, where the first port and the second port are different ports.

The determining unit 702 is configured to determine a first priority of the first TCP channel and a second priority of the second TCP channel.

The transmission unit 703 is configured to transmit a packet through the first TCP channel or the second TCP channel based on a priority of the packet.

Optionally, in some possible designs:
The transmission unit 703 is further configured to send a first advertisement message to the Openflow controller through the first TCP channel, where the first advertisement message carries information about the first priority.
The transmission unit 703 is further configured to send a second advertisement message to the Openflow controller through the second TCP channel, where the second advertisement message carries information about the second priority.

Optionally, in some possible designs, the first advertisement message may be a first session priority message, and the second advertisement message may be a second session priority message.

The transmission unit 703 is further configured to receive a first session priority reply message from the Openflow controller through the first TCP channel, where the first session priority reply message is used by the Openflow controller to confirm the first priority determined by the Openflow switch. In addition, the first session priority reply message may further include a priority reallocated by the Openflow controller to the first TCP channel, and the Openflow controller notifies, by using the first session priority reply message, the Openflow switch of using the priority reallocated by the Openflow controller as the priority of the first TCP channel.

The transmission unit 703 is further configured to receive a second session priority reply message from the Openflow controller through the second TCP channel, where the second session priority reply message is used by the Openflow controller to confirm the second priority determined by the Openflow switch. In addition, the second session priority reply message may further include a priority reallocated by the Openflow controller to the second TCP channel, and the Openflow controller notifies, by using the second session priority reply message, the Openflow switch of using the priority reallocated by the Openflow controller as the priority of the second TCP channel.

Optionally, in some possible designs, the first advertisement message is a first feature reply message, the second advertisement message is a second feature reply message, and before the transmission unit sends the first advertisement message and the second advertisement message,

The transmission unit 703 is further configured to receive a first feature request message from the Openflow controller through the first TCP channel.

The transmission unit 703 is further configured to receive a second feature request message from the Openflow controller through the second TCP channel.

Optionally, in some possible designs:
After the determining unit 702 determines that the priority of the packet is the same as the first priority, the transmission unit 703 is specifically configured to transmit the packet through the first TCP channel; or

After the determining unit 702 determines that the priority of the packet is the same as the second priority, the transmission unit 703 is specifically configured to transmit the packet through the second TCP channel.

Optionally, in some possible designs:
The determining unit 702 is further configured to determine that the priority of the packet is the same as the first priority.

The determining unit 702 is further configured to determine that a bandwidth occupation rate of the first TCP channel is greater than a first threshold and a bandwidth occupation rate of the second TCP channel is less than a second threshold.

The transmission unit 703 is further configured to: transmit the packet through the second TCP channel after the determining unit determines that the bandwidth occupation rate of the first TCP channel is greater than the first threshold and the bandwidth occupation rate of the second TCP channel is less than the second threshold.

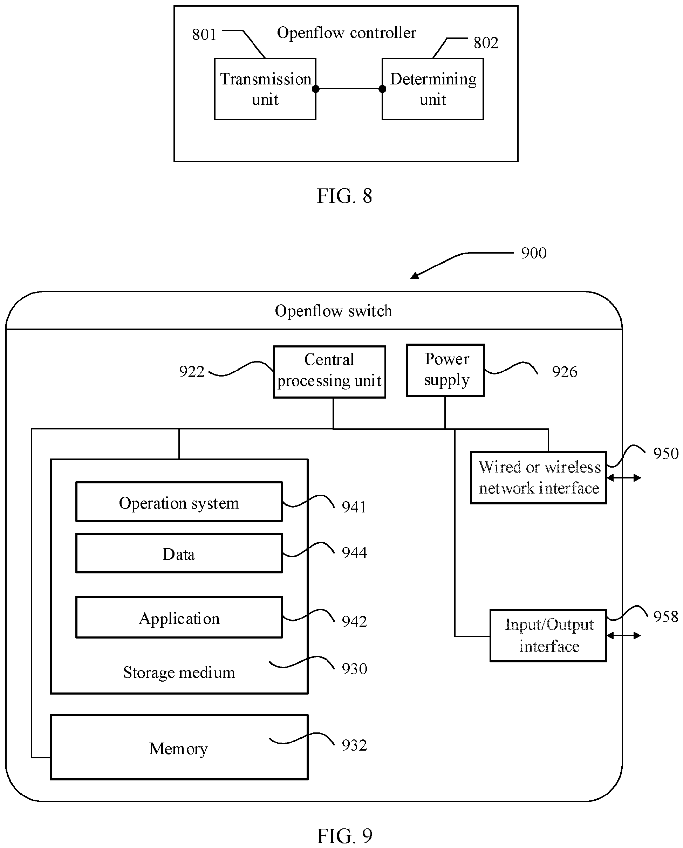

The Openflow switch in this embodiment of this application is described above. The following describes an Openflow controller in an embodiment of this application. FIG. 8 is an implementation of the Openflow controller in this embodiment of this application. The Openflow controller may include a transmission unit 801 and a determining unit 802.

The transmission unit 801 is configured to receive a first advertisement message sent by the Openflow switch through the first TCP channel, where the first advertisement message carries information about a first priority.

The transmission unit 801 is further configured to receive a second advertisement message sent by the Openflow switch through the second TCP channel, where the second advertisement message carries information about a second priority.

The determining unit 802 is configured to: determine, based on the first advertisement message, that a priority of the first TCP channel is the first priority; and determine, based on the second advertisement message, that a priority of the second TCP channel is the second priority.

The transmission unit 801 is further configured to transmit a packet through the first TCP channel or the second TCP channel based on a priority of the packet.

Optionally, in some possible designs, the first advertisement message is a first session priority message, and the second advertisement message is a second session priority message.

The transmission unit 801 is further configured to send the first session priority reply message to the Openflow switch through the first TCP channel, where the first session priority reply message is used to notify the Openflow switch: that the determining unit 802 confirms that the first priority determined by the Openflow switch is a priority of the first TCP channel.

The transmission unit 801 is further configured to send the second session priority reply message to the Openflow switch through the second TCP channel, where the second session priority reply message is used to notify the Openflow switch: that the determining unit 802 confirms that the second priority determined by the Openflow switch is a priority of the second TCP channel.

Optionally, in some possible designs, the first advertisement message may be a first feature reply message, the second advertisement message is a second feature reply message, and before the transmission unit 801 receives the first advertisement message and the second advertisement message sent by the Openflow switch,

The transmission unit 801 is further configured to send a first feature request message to the Openflow switch through the first TCP channel.

The transmission unit 801 is further configured to send a second feature request message to the Openflow switch through the second TCP channel.

Optionally, in some possible designs:
After the determining unit 802 determines that the priority of the packet is the same as the first priority, the transmission unit 801 is specifically configured to transmit the packet through the first TCP channel; or
After the determining unit 802 determines that the priority of the packet is the same as the second priority, the transmission unit 801 is specifically configured to transmit the packet through the second TCP channel.

Optionally, in some possible designs:
The determining unit 802 is further configured to determine that the priority of the packet is the same as the first priority.

The determining unit 802 is further configured to determine that a bandwidth occupation rate of the first TCP channel is greater than a first threshold and a bandwidth occupation rate of the second TCP channel is less than a second threshold.

The transmission unit 801 is further configured to: transmit the packet through the second TCP channel after the determining unit determines that the bandwidth occupation rate of the first TCP channel is greater than the first threshold and the bandwidth occupation rate of the second TCP channel is less than the second threshold.

FIG. 9 is a schematic structural diagram of an Openflow switch according to an embodiment of this application. The Openflow switch 900 may have a relatively large difference because of different configuration or different performance, and may include one or more central processing units (central processing units, CPU) 922 (for example, one or more processors) and a memory 932, one or more storage media 930 (for example, one or more large-capacity storage devices) storing an application program 942 or data 944. The memory 932 and the storage medium 930 may be used for temporary storage or permanent storage. A program stored in the storage medium 930 may include one or more modules (not shown in the figure), and each module may include a series of instruction operations to be performed on the Openflow switch. Further, the central processing unit 922 may be configured to communicate with the storage medium 930, and perform, on the Openflow switch 900, the series of instruction operations in the storage medium 930.

The Openflow switch 900 may further include one or more power supplies 926, one or more wired or wireless network interfaces 950, one or more input/output interfaces 958, and/or one or more operating systems 941 such as Windows ServerTM, Mac OS XTM, UnixTM, LinuxTM, and FreeBSDTM.

In the above embodiment, the steps performed by the Openflow switch may be based on the Openflow switch structure shown in FIG. 9.

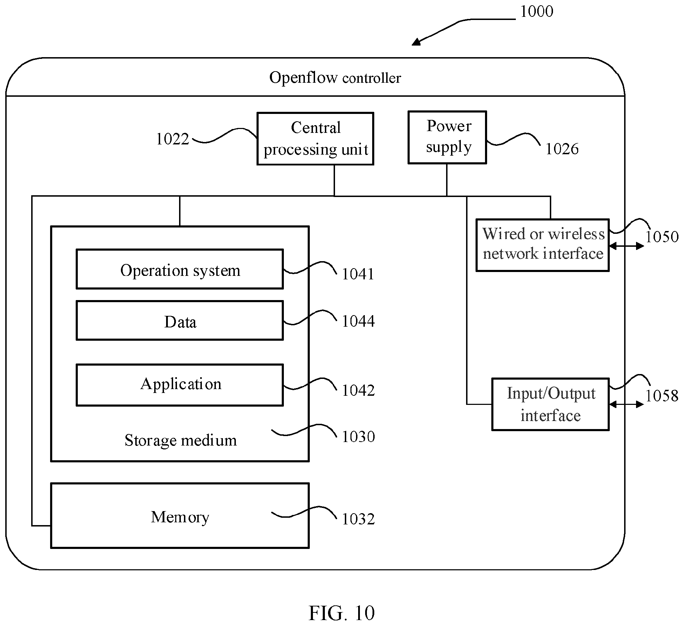

FIG. 10 is a schematic structural diagram of an Openflow controller according to an embodiment of this application. The Openflow controller 1000 may have a relatively large difference because of different configuration or different performance, and may include one or more central processing units (central processing units, CPU) 1022 (for example, one or more processors) and a memory 1032, one or more storage media 1030 (for example, one or more large-capacity storage devices) storing an application program 1042 or data 1044. The memory 1032 and the storage medium 1030 may be used for temporary storage or permanent storage. A program stored in the storage medium 1030 may include one or more modules (not shown in the figure), and each module may include a series of instruction operations to be performed on the Openflow controller. Further, the central processing unit 1022 may be configured to communicate with the storage medium 1030, and perform, on the Openflow controller 1000, the series of instruction operations in the storage medium 1030.

The Openflow controller 1000 may further include one or more power supplies 1026, one or more wired or wireless network interfaces 1050, one or more input/output interfaces 1058, and/or one or more operating systems 1041 such as Windows ServerTM, Mac OS XTM, UnixTM, LinuxTM, and FreeBSDTM.

In the foregoing embodiment, the steps performed by the Openflow controller may be based on the Openflow controller structure shown in FIG. 10.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units may be integrated into one unit. The integrated units may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in FIG. 2 to FIG. 6 in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, and an optical disc.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A data transmission method, wherein the method comprises:
establishing, by an Openflow Openflow switch, a first TCP channel between a first port of the Openflow switch and a third port of an Openflow controller, and establishing, by the Openflow switch, a second TCP channel between a second port of the Openflow switch and the third port of the Openflow controller, wherein the first port and the second port are different ports;
determining, by the Openflow switch, a first priority of the first TCP channel and a second priority of the second TCP channel; and
transmitting, by the Openflow switch, a packet through the first TCP channel or the second TCP channel based on a priority of the packet.

2. The method according to claim 1, wherein before the transmitting, by the Openflow switch, a packet through the first TCP channel or the second TCP channel based on a priority of the packet, the method further comprises:
sending, by the Openflow switch, a first advertisement message to the Openflow controller through the first TCP channel, wherein the first advertisement message carries information about the first priority; and
sending, by the Openflow switch, a second advertisement message to the Openflow controller through the second TCP channel, wherein the second advertisement message carries information about the second priority.

3. The method according to claim 2, wherein the first advertisement message is a first session priority message, the second advertisement message is a second session priority message, and the method further comprises:
receiving, by the Openflow switch, a first session priority reply message from the Openflow controller through the first TCP channel, wherein the first session priority reply message is used by the Openflow controller to confirm the first priority determined by the Openflow switch; and
receiving, by the Openflow switch, a second session priority reply message from the Openflow controller through the second TCP channel, wherein the second session priority reply message is used by the Openflow controller to confirm the second priority determined by the Openflow switch.

4. The method according to claim 2, wherein the first advertisement message is a first feature reply message, the second advertisement message is a second feature reply message, and before the Openflow switch sends the first advertisement message and the second advertisement message, the method further comprises:
receiving, by the Openflow switch, a first feature request message from the Openflow controller through the first TCP channel; and
receiving, by the Openflow switch, a second feature request message from the Openflow controller through the second TCP channel.

5. The method according to any one of claims 1 to 4, wherein the transmitting, by the Openflow switch, a packet through the first TCP channel or the second TCP channel based on a priority of the packet comprises:
determining, by the Openflow switch, that the priority of the packet is the same as the first priority, and transmitting, by the Openflow switch, the packet through the first TCP channel; or
determining, by the Openflow switch, that the priority of the packet is the same as the second priority, and transmitting, by the Openflow switch, the packet through the second TCP channel.

6. The method according to any one of claims 1 to 4, wherein the transmitting, by the Openflow switch, a packet through the first TCP channel or the second TCP channel based on a priority of the packet comprises:
determining, by the Openflow switch, that the priority of the packet is the same as the first priority;
determining, by the Openflow switch, that a bandwidth occupation rate of the first TCP channel is greater than a first threshold and a bandwidth occupation rate of the second TCP channel is less than a second threshold; and
transmitting, by the Openflow switch, the packet through the second TCP channel.

7. A data transmission method, wherein a first TCP channel is established between a first port of an Openflow switch and a third port of an Openflow controller, a second TCP channel is established between a second port of the Openflow switch and the third port of the Openflow controller, the first port and the second port are different ports, and the method comprises:
receiving, by the Openflow controller through the first TCP channel, a first advertisement message sent by the Openflow switch, wherein the first advertisement message carries information about a first priority;
receiving, by the Openflow controller through the second TCP channel, a second advertisement message sent by the Openflow switch, wherein the second advertisement message carries information about a second priority;
determining, by the Openflow controller based on the first advertisement message, that a priority of the first TCP channel is the first priority, and determining, based on the second advertisement message, that a priority of the second TCP channel is the second priority; and
transmitting, by the Openflow controller, a packet through the first TCP channel or the second TCP channel based on a priority of the packet.

8. The method according to claim 7, wherein the first advertisement message is a first session priority message, the second advertisement message is a second session priority message, and the method further comprises:
sending, by the Openflow controller, the first session priority reply message to the Openflow switch through the first TCP channel, wherein the first session priority reply message is used by the Openflow controller to confirm the first priority determined by the Openflow switch; and
sending, by the Openflow controller, the second session priority reply message to the Openflow switch through the second TCP channel, wherein the second session priority reply message is used by the Openflow controller to confirm the second priority determined by the Openflow switch.

9. The method according to claim 7, wherein the first advertisement message is a first feature reply message, the second advertisement message is a second feature reply message, and before the Openflow controller receives the first advertisement message and the second advertisement message sent by the Openflow switch, the method further comprises:
sending, by the Openflow controller, a first feature request message to the Openflow switch through the first TCP channel; and
sending, by the Openflow controller, a second feature request message to the Openflow switch through the second TCP channel.

10. The method according to any one of claims 7 to 9, wherein the transmitting, by the Openflow controller, a packet through the first TCP channel or the second TCP channel based on a priority of the packet comprises:
determining, by the Openflow controller, that the priority of the packet is the same as the first priority, and transmitting, by the Openflow controller, the packet through the first TCP channel; or
determining, by the Openflow controller, that the priority of the packet is the same as the second priority, and transmitting, by the Openflow controller, the packet through the second TCP channel.

11. The method according to any one of claims 7 to 9, wherein the transmitting, by the Openflow controller, a packet through the first TCP channel or the second TCP channel based on a priority of the packet comprises:
determining, by the Openflow controller, that the priority of the packet is the same as the first priority;
determining, by the Openflow controller, that a bandwidth occupation rate of the first TCP channel is greater than a first threshold and a bandwidth occupation rate of the second TCP channel is less than a second threshold; and
transmitting, by the Openflow controller, the packet through the second TCP channel.

12. An Openflow switch, wherein the Openflow switch comprises:
an establishment unit, configured to: establish a first TCP channel between a first port of the Openflow switch and a third port of an Openflow controller, and establish a second TCP channel between a second port of the Openflow switch and the third port of the Openflow controller, wherein the first port and the second port are different ports;
a determining unit, configured to determine a first priority of the first TCP channel and a second priority of the second TCP channel; and
a transmission unit, configured to transmit a packet through the first TCP channel or the second TCP channel based on a priority of the packet.

13. The Openflow switch according to claim 12, wherein
the transmission unit is further configured to send a first advertisement message to the Openflow controller through the first TCP channel, wherein the first advertisement message carries information about the first priority; and
the transmission unit is further configured to send a second advertisement message to the Openflow controller through the second TCP channel, wherein the second advertisement message carries information about the second priority.

14. The Openflow switch according to claim 13, wherein the first advertisement message is a first session priority message, and the second advertisement message is a second session priority message;
the transmission unit is further configured to receive a first session priority reply message from the Openflow controller through the first TCP channel, wherein the first session priority reply message is used by the Openflow controller to confirm the first priority determined by the Openflow switch; and
the transmission unit is further configured to receive a second session priority reply message from the Openflow controller through the second TCP channel, wherein the second session priority reply message is used by the Openflow controller to confirm the second priority determined by the Openflow switch.

15. The Openflow switch according to claim 13, wherein the first advertisement message is a first feature reply message, the second advertisement message is a second feature reply message, and before the transmission unit sends the first advertisement message and the second advertisement message,
the transmission unit is further configured to receive a first feature request message from the Openflow controller through the first TCP channel; and
the transmission unit is further configured to receive a second feature request message from the Openflow controller through the second TCP channel.

16. The Openflow switch according to any one of claims 12 to 15, wherein
the transmission unit is specifically configured to transmit the packet through the first TCP channel after the determining unit determines that the priority of the packet is the same as the first priority; or
the transmission unit is specifically configured to transmit the packet through the second TCP channel after the determining unit determines that the priority of the packet is the same as the second priority.

17. The Openflow switch according to any one of claims 12 to 15, wherein
the determining unit is further configured to determine that the priority of the packet is the same as the first priority;
the determining unit is further configured to determine that a bandwidth occupation rate of the first TCP channel is greater than a first threshold and a bandwidth occupation rate of the second TCP channel is less than a second threshold; and
the transmission unit is further configured to transmit the packet through the second TCP channel after the determining unit determines that the bandwidth occupation rate of the first TCP channel is greater than the first threshold and the bandwidth occupation rate of the second TCP channel is less than the second threshold.

18. An Openflow controller, wherein a first TCP channel is established between a first port of an Openflow switch and a third port of the Openflow controller, a second TCP channel is established between a second port of the Openflow switch and the third port of the Openflow controller, the first port and the second port are different ports, and the Openflow controller comprises:
a transmission unit, configured to receive, through the first TCP channel, a first advertisement message sent by the Openflow switch, wherein the first advertisement message carries information about a first priority, wherein
the transmission unit is further configured to receive, through the second TCP channel, a second advertisement message sent by the Openflow switch, wherein the second advertisement message carries information about a second priority; and
a determining unit, configured to: determine, based on the first advertisement message, that a priority of the first TCP channel is the first priority; and determine, based on the second advertisement message, that a priority of the second TCP channel is the second priority, wherein
the transmission unit is further configured to transmit a packet through the first TCP channel or the second TCP channel based on a priority of the packet.

19. The Openflow controller according to claim 18, wherein the first advertisement message is a first session priority message, and the second advertisement message is a second session priority message;
the transmission unit is further configured to send the first session priority reply message to the Openflow switch through the first TCP channel, wherein the first session priority reply message is used by the determining unit to confirm the first priority determined by the Openflow switch; and
the transmission unit is further configured to send the second session priority reply message to the Openflow switch through the second TCP channel, wherein the second session priority reply message is used by the Openflow controller to confirm the second priority determined by the Openflow switch.

20. The Openflow controller according to claim 18, wherein the first advertisement message is a first feature reply message, the second advertisement message is a second feature reply message, and before the transmission unit receives the first advertisement message and the second advertisement message sent by the Openflow switch,
the transmission unit is further configured to send a first feature request message to the Openflow switch through the first TCP channel; and
the transmission unit is further configured to send a second feature request message to the Openflow switch through the second TCP channel.

21. The Openflow controller according to any one of claims 18 to 20, wherein
the transmission unit is specifically configured to transmit the packet through the first TCP channel after the determining unit determines that the priority of the packet is the same as the first priority; or
the transmission unit is specifically configured to transmit the packet through the second TCP channel after the determining unit determines that the priority of the packet is the same as the second priority.

22. The Openflow controller according to any one of claims 18 to 20, wherein
the determining unit is further configured to determine that the priority of the packet is the same as the first priority;
the determining unit is further configured to determine that a bandwidth occupation rate of the first TCP channel is greater than a first threshold and a bandwidth occupation rate of the second TCP channel is less than a second threshold; and
the transmission unit is further configured to transmit the packet through the second TCP channel after the determining unit determines that the bandwidth occupation rate of the first TCP channel is greater than the first threshold and the bandwidth occupation rate of the second TCP channel is less than the second threshold.

23. An Openflow switch, comprising:
a processor and a memory, wherein
the memory stores program code; and
when invoking the program code in the memory, the processor performs steps of the method according to any one of claims 1 to 6.

24. An Openflow controller, comprising:
a processor and a memory, wherein
the memory stores program code; and
when invoking the program code in the memory, the processor performs steps of the method according to any one of claims 7 to 11.
